# EUROPEAN PATENT APPLICATION

(11) **EP 4 804 094 A1**
(43) Date of publication of application: **09.09.2026**
(21) Application number: 26156217.7
(22) Date of filing: 04.02.2026
(51) Int. Cl.: G06Q 10/101, H04L 65/403

(54) **INFORMATION PROCESSING SYSTEM, COMMUNICATION SYSTEM, INFORMATION PROCESSING METHOD, AND CARRIER MEANS**

(30) Priority: 05.03.2025 JP 2025034924; 20.11.2025 JP 2025200744
(71) Applicant: Ricoh Company, Ltd., Tokyo 143-8555 (JP)
(72) Inventor: Fukasawa, Naoki, Tokyo, 143-8555 (JP)
(74) Representative: Marks & Clerk LLP

(57) **Abstract**

An information processing system (50) for sharing content in a virtual room for which one or more virtual projects are settable, includes a determination unit (62) configured to, in a case where the content is to be shared, determine whether the one or more virtual projects include a virtual project associated with the virtual room; an association processing unit (53) configured to, based on a determination that the one or more virtual projects include the virtual project, associate the content with the virtual project; and a control unit (56) configured to share the content associated with the virtual project with a user associated with the virtual project.

## Description

### Technical Field

The present disclosure relates to an information processing system, a communication system, an information processing method, and carrier means.

### Related Art

In the related art, services are known that control content to make the content accessible to users at remote locations.

In Japanese Unexamined Patent Application Publication No. 2022-147309, operation identification information for identifying a device operation is stored in association with an authorization token for external storage connected via remote communication when data acquired by a device is to be uploaded to the external storage. This makes it possible to reduce the time and effort for user processing.

However, it is difficult to flexibly manage content to be shared in a virtual room.

### SUMMARY

The present disclosure described herein provides an information processing system for sharing content in a virtual room for which one or more virtual projects are settable. The information processing system includes a determination unit, an association processing unit, and a control unit. In a case where the content is to be shared, the determination unit determines whether the one or more virtual projects include a virtual project associated with the virtual room. Based on a determination that the one or more virtual projects include the virtual project, the association processing unit associates the content with the virtual project. The control unit shares the content associated with the virtual project with a user associated with the virtual project.

The present disclosure described herein provides a communication system including a plurality of communication terminals and an information processing system. The information processing system shares content in a virtual room for which one or more virtual projects are settable. The information processing system includes a communication unit communicable with the plurality of communication terminals, an association processing unit, and a control unit. In a case where the content is to be shared, the determination unit determines whether the one or more virtual projects include a virtual project associated with the virtual room. Based on a determination that the one or more virtual projects include the virtual project, the association processing unit associates the content with the virtual project. The control unit shares the content associated with the virtual project with a communication terminal associated with the virtual project among the plurality of communication terminals. The communication terminal includes a communication unit and a display control unit. The communication unit communicates with the information processing system to access the virtual project associated with the communication terminal. The display control unit causes a display unit to display the content associated with the virtual project in response to accessing the virtual project.

The present disclosure described herein provides an information processing method for sharing content in a virtual room for which one or more virtual projects are settable. The information processing method includes determining, in a case where the content is to be shared, whether the one or more virtual projects include a virtual project associated with the virtual room; associating, based on a determination that the one or more virtual projects include the virtual project, the content with the virtual project; and sharing the content associated with the virtual project with a user associated with the virtual project.

The present disclosure described herein provides carrier means carrying computer readable code for controlling a computer system to carry out the above-described method.

According to one aspect of the present disclosure, content to be shared in a virtual room is flexibly managed to improve convenience.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of remote communication using a wide-view image;
FIG. 2 is a diagram illustrating an example schematic configuration of a communication system;
FIG. 3 is a diagram illustrating an example hardware configuration of an image capturing apparatus;
FIG. 4 is a diagram illustrating an example hardware configuration of a communication terminal and an information processing system;
FIGs. 5A, 5B, and 5C are a left side view, a front view, and a plan view of the image capturing apparatus according to an embodiment of the present disclosure, respectively;
FIG. 6 is an illustration of an example of how the image capturing apparatus is used;
FIGs. 7A, 7B, and 7C are diagrams illustrating an example of a hemispherical image (front side) captured by the image capturing apparatus, an example of a hemispherical image (back side) captured by the image capturing apparatus, and an example of an image in equirectangular projection, respectively;
FIG. 8A is an illustration of an example of how the image in equirectangular projection is mapped to a surface of a sphere;
FIG. 8B is a diagram illustrating an example of a spherical image;
FIG. 9 is a diagram illustrating an example of the positions of a virtual camera and a predetermined area in a case where the spherical image is of a three-dimensional sphere;
FIG. 10A is a perspective view of an example of the virtual camera and the predetermined area illustrated in FIG. 9;
FIG. 10B is a diagram illustrating an example of an image of the predetermined area displayed on a display;
FIG. 11 is a diagram illustrating an example of the relationship between predetermined-area information and the image of the predetermined area;
FIG. 12 is a diagram illustrating an example of a point in a three-dimensional Euclidean space defined in spherical coordinates;
FIG. 13 is a diagram illustrating an example functional configuration of a communication system according to a first embodiment of the present disclosure;
FIGs. 14A and 14B are illustrations of image management information stored in an image management information storage unit according to the first embodiment of the present disclosure;
FIG. 15 is an illustration of virtual room information stored in a virtual room information storage unit according to the first embodiment of the present disclosure;
FIG. 16 is an illustration of virtual room authentication information stored in a virtual room authentication information storage unit according to the first embodiment of the present disclosure;
FIG. 17 is an illustration of device information stored in a device information storage unit according to the first embodiment of the present disclosure;
FIG. 18 is an illustration of virtual project authentication information stored in a virtual project authentication information storage unit according to the first embodiment of the present disclosure;
FIG. 19 is an illustration of virtual project period information stored in a virtual project period information storage unit according to the first embodiment of the present disclosure;
FIG. 20 is an illustration of content information stored in a content information storage unit according to the first embodiment of the present disclosure;
FIG. 21A is a diagram illustrating an example of a room entry screen;
FIG. 21B is a diagram illustrating an example of an image viewing screen displayed on the communication terminal in response to a user entering a virtual room;
FIG. 22 is a sequence diagram illustrating an example of a process in which the user (or the communication terminal) enters the virtual room;
FIG. 23 is a diagram illustrating an example of a virtual room association screen for associating an image capturing apparatus with a virtual room according to the first embodiment of the present disclosure;
FIG. 24 is a diagram illustrating an example of the virtual room association screen according to the first embodiment of the present disclosure;
FIG. 25 is a diagram illustrating an example of the virtual room association screen according to the first embodiment of the present disclosure;
FIGs. 26A and 26B are diagrams illustrating examples of a wide-view image transmission start/stop dialog displayed on the communication terminal according to the first embodiment of the present disclosure;
FIG. 27 is a sequence diagram illustrating an example of a procedure in which a user registers an image capturing apparatus in a virtual room;
FIG. 28 is a sequence diagram illustrating an example of a process for sharing a wide-view image.
FIG. 29 is a diagram illustrating the correspondence relationship between a virtual room and virtual projects according to the first embodiment of the present disclosure;
FIG. 30 is a diagram illustrating an example of a dashboard screen displayed on a communication terminal of an administrator of a virtual room by an information processing system according to the first embodiment of the present disclosure;
FIGs. 31A and 31B are diagrams illustrating examples of screens related to a virtual project, which are displayed on a communication terminal of a user belonging to the virtual project by the information processing system according to the first embodiment of the present disclosure;
FIG. 32 is a sequence diagram illustrating a processing procedure performed in the communication system according to the first embodiment of the present disclosure until content distributed online in a virtual room is stored;
FIG. 33 is a sequence diagram illustrating a processing procedure performed in the communication system according to the first embodiment of the present disclosure until content recorded offline in a virtual room is stored;
FIG. 34 is a flowchart illustrating a processing procedure performed in the information processing system according to the first embodiment of the present disclosure until the attribution of content data is identified and registered;
FIG. 35 is a diagram illustrating an example of a dashboard screen displayed on a communication terminal of an administrator of a virtual room by an information processing system according to a second embodiment of the present disclosure;
FIG. 36 is an illustration of virtual project period information stored in a virtual project period information storage unit according to the second embodiment of the present disclosure;
FIG. 37 is an illustration of content information stored in a content information storage unit according to the second embodiment of the present disclosure;
FIG. 38 is a diagram illustrating a screen flow for sharing content data associated with one virtual project with another virtual project according to a third embodiment of the present disclosure;
FIG. 39 is a flowchart illustrating a process for authenticating a virtual project with which content is to be shared in an information processing system according to the third embodiment of the present disclosure;
FIG. 40 is an illustration of content information stored in a content information storage unit according to the third embodiment of the present disclosure; and
FIG. 41 is a diagram illustrating an example of remote communication using a communication system in telemedicine.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, an information processing system, an information processing method, a program, and a communication system according to an example embodiment of the present disclosure will be described.

### First Embodiment

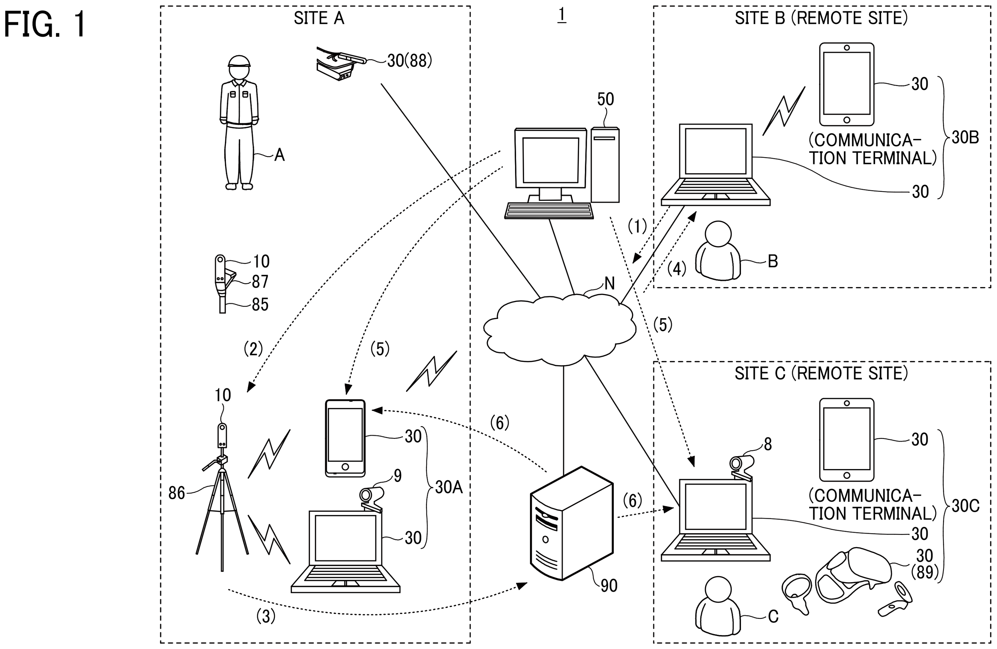

FIG. 1 is a diagram illustrating an example system configuration for implementing remote communication using a wide-view image according to an embodiment of the present disclosure. In FIG. 1, communication takes place across three sites, namely, a site A, a site B, and a site C, via an information processing system 50. Three sites are merely an example, and communication may be performed across two sites or four or more sites.

Remote communication refers to communication that takes place among users at physically distant locations by using information technology (IT) tools through at least one of an image and audio.

In one example, the site A is a construction site. The sites B and C are any sites across which a wide-view image can be communicated. In one example, the sites B and C are offices. An image capturing apparatus 10 is placed at the site A. In one example, the image capturing apparatus 10 captures a wide-angle image called a spherical image and an image with a wide angle of view ranging from, for example, 180 degrees to 360 degrees in the horizontal direction. Such an image with a wide angle of view is hereinafter simply referred to as a "wide-view image". Communication terminals 30A to 30C for viewing a wide-view image are placed at the sites A to C, respectively. Any communication terminal or communication terminals among the communication terminals 30A to 30C are hereinafter referred to as a "communication terminal 30" or "communication terminals 30".

In the construction site, workers are involved in various constructions at various places. A user A at the site A, a user B at the site B, and a user C at the site C monitor any construction and/or work of interest by changing a point of view as appropriate for a wide-view image that is a captured image of the entire construction site. The term "point of view" refers to the center position or range of the entire wide-view image. The center position or range of the entire wide-view image is to be displayed on displays or other means of the communication terminals 30A to 30C.

In one example, the image capturing apparatus 10 is attached to a tripod 86. In another example, the image capturing apparatus 10 is attached to an arm 85 through a gimbal 87. A relay device is installed at the construction site. In FIG. 1, the communication terminal 30A also functions as the relay device. The communication terminal 30A receives a wide-view image from the image capturing apparatus 10 via a wire or wirelessly and transmits the received wide-view image to the information processing system 50. The communication terminal 30A may also function as a terminal for viewing the wide-view image. In one example, an image capturing apparatus 9 connected to (or incorporated in) the communication terminal 30A captures an image having a normal angle of view (or a spherical image), and the captured image is transmitted to the information processing system 50. In another example, smart glasses 88 worn by the user A capture an image having a normal angle of view (or a spherical image), and the captured image is transmitted to the information processing system 50. The user A may be a worker. The smart glasses 88 are an information terminal having a display on which information acquired via the Internet is displayed with a field of view maintained. The smart glasses 88 may be placed at any site.

The communication terminal 30B, such as a personal computer (PC) or a smartphone, is placed at the site B. The communication terminal 30B is any device communicable with the information processing system 50 via a communication network N. Other examples of the communication terminal 30B include display devices such as a tablet terminal, a personal digital assistant (PDA), an electronic whiteboard, and a projector. A camera may be incorporated in or connected to the communication terminal 30B.

The communication terminal 30C, such as a PC, a smartphone, or virtual reality (VR) goggles 89, is placed at the site C. In FIG. 1, an image capturing apparatus 8 is incorporated in or connected to the communication terminal 30C. The VR goggles 89 are an information terminal for displaying a computer-based artificial world or a spherical image in accordance with the direction of movement of the neck or the body of the user wearing the VR goggles 89. The image capturing apparatus 8 may be for a wide angle of view or a normal angle of view. The communication terminal 30C is any device communicable with the information processing system 50 via the communication network N. Other examples of the communication terminal 30C include display devices such as a tablet terminal, a PDA, an electronic whiteboard, and a projector. The VR goggles 89 may be placed at any site.

In the present embodiment, the image capturing apparatus 10 and the communication terminals 30 are managed using a virtually provided area referred to as a virtual room. The image capturing apparatus 10 is associated with the virtual room. Each of the communication terminals 30 (the user who operates each of the communication terminals 30) enters (or accesses) the virtual room to receive content associated with the virtual room, for example, a wide-view image transmitted from the image capturing apparatus 10. The users of the communication terminals 30 can view the received wide-view image. The smart glasses 88 and the VR goggles 89 can also be associated with the virtual room. The image capturing apparatuses 8 and 9 enter the virtual room together with the communication terminals 30.

The term "virtual room" refers to a virtual area that can be used by a plurality of users using, for example, a computer. In a virtual room, for example, a means for a plurality of users accessing the virtual room to communicate with each other, and a means for users accessing the virtual room to use content shared in the virtual room are provided. The present embodiment illustrates an example of a virtual room, and may employ any mechanism that allows a plurality of users to share content. The virtual room is assigned in accordance with, for example, a contract with an administrator.

The users A to C at the sites A to C can each change the point of view for the wide-view image, as desired. Thus, the users A to C may view the wide-view image in real time from different points of view. It may be difficult for the users A to C to mutually understand each other. In the present embodiment, accordingly, the point of view of the communication terminal 30 at the site A is shared by the communication terminals 30 at the other sites, namely, the sites B and C. An overview of the sharing of a point of view will be described. In the following description, in one example, the point of view of the user B at the site B is shared by the users A and C at the sites A and C.
(1) The communication terminals 30A to 30C share a wide-view image (an example of a first wide-view image) captured by the image capturing apparatus 10. In response to the user B making a request to capture a wide-view image while viewing the wide-view image from any point of view on the communication terminal 30B, the communication terminal 30B (an example of a first communication terminal) transmits point-of-view information and the request to the information processing system 50.
(2) In response to the request, the information processing system 50 designates point-of-view information and transmits an image capturing request to the image capturing apparatus 10 to capture an image (either a still image or a moving image).
(3) The image capturing apparatus 10 captures a wide-view image (an example of a second wide-view image) in response to the image capturing request, and stores the wide-view image and the point-of-view information in a location specified by a uniform resource locator (URL) (an example of storage destination information) transmitted from the information processing system 50. In FIG. 1, the image capturing apparatus 10 stores the wide-view image and the point-of-view information in an external storage 90. The wide-view image stored in the external storage 90 can be downloaded and displayed by any communication terminal 30.
(4) The information processing system 50 transmits the URL to the communication terminal 30B.
(5) The information processing system 50 further transmits the URL to the communication terminals 30A and 30C (examples of a second communication terminal), which are in the same virtual room as that which the image capturing apparatus 10 and the communication terminal 30B are in, automatically or in response to a request from the user B.
(6) The communication terminals 30A and 30C connect to the URL and receive the point-of-view information and the wide-view image. Each of the communication terminals 30A and 30C sets and displays a point of view identified by the point-of-view information for the wide-view image such that the point of view matches the center of an image area. In one example, the point of view is not made to completely match the center of the image area. In another example, the point of view may be set and displayed so as to be included in a range near the center of the image area.

The same applies when the point of view of the user A at the site A is shared by the users B and C at the sites B and C and when the point of view of the user C at the site C is shared by the users A and B at the sites A and B.

As described above, in a communication system 1 according to the present embodiment, even in a case where a wide-view image is distributed, point-of-view information is shared across the respective sites. This facilitates understanding among users at the respective sites.

In (3), the image capturing apparatus 10 may transmit the wide-view image itself to the information processing system 50. In (4), the information processing system 50 may transmit the wide-view image to the communication terminals 30A to 30C.

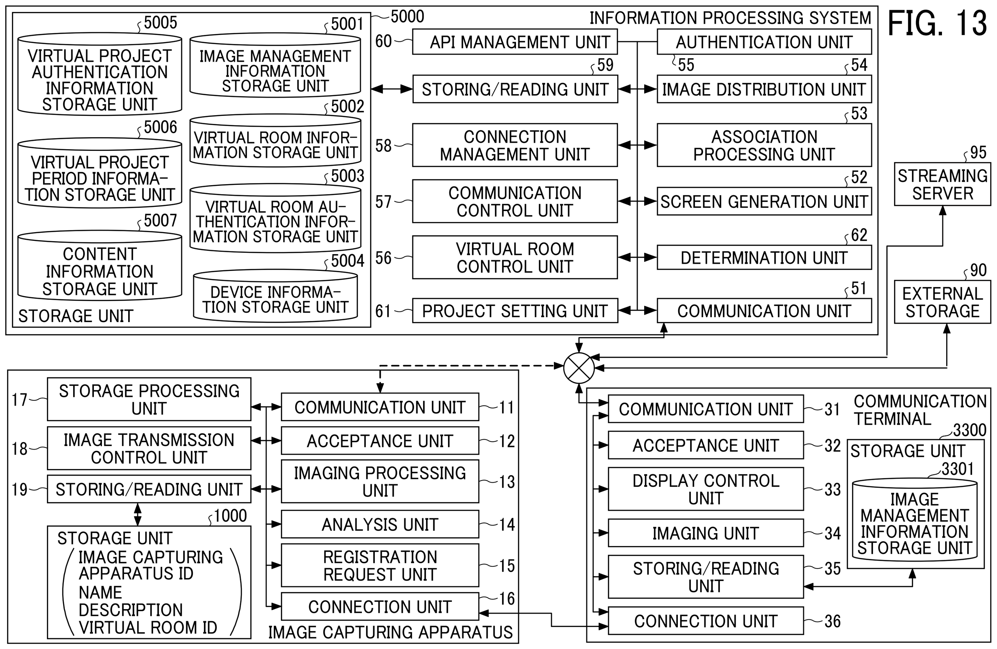

The communication system 1 according to the present embodiment may also distribute video captured by the image capturing apparatus 10 to the plurality of communication terminals 30 in real time by using a streaming server 95 (see, for example, FIG. 13).

In the example illustrated in FIG. 1, the image capturing apparatus 10 is placed at a construction site. The present embodiment is also applicable to VR education, event distribution, remote customer services, telemedicine services, and other suitable situations.

In VR education, the image capturing apparatus 10 is placed at a site such as a study room or a laboratory. Students can view a blackboard, an instrument, a sample, an experimental result, or the like from remote sites while changing the points of view as appropriate. In event distribution, the image capturing apparatus 10 is placed in a venue of an event to be held on-site. Event participants such as an audience can view the details in the venue online from remote sites while changing the points of view as appropriate. The details in the venue include images of event performers, event participants, and event presenters, images of objects involved in the event, such as products and exhibits, images of materials involved in the event, and images of the venue. The event may be held indoors or outdoors, and examples of the venue of the event include venues such as sports stadiums, concert halls, and theaters. In remote customer services, for example, in customer services for a travel agency, the image capturing apparatus 10 is placed at each of travel destination sites. A customer can plan their itinerary from a remote site while changing the point of view as appropriate.

In telemedicine services, in one example, the image capturing apparatus 10 is placed in a medical setting such as an operating room. Medical people such as doctors, medical students, and persons related to medical instruments can view the performance of a doctor(s) and a nurse(s) during on-site medical treatment, the arrangement of medical instruments, the state of a patient, vitals, and the like from remote sites while changing the points of view as appropriate.

The site at which an image is captured is not limited to any of the sites described above. An image may be captured in any space that a user (or viewer) at a viewing site desires to remotely grasp. Examples of such a space include a school, a factory, a warehouse, a building site, a server room, and a store.

### Terminology

VR education is an educational tool using VR that represents an unrealistic space in front of the eyes of a user such as a child by using a predetermined display device. In VR education, the reality of space, which is a feature of VR, increases a user's sense of immersion, thereby attracting the user's interest in subjects of education and the like to deepen understanding.

The term "remote customer service" refers to a customer service in which staff at a remote location provide product guidance to a user who is a customer by using a video conference connected via, for example, a communication terminal such as a tablet or an information processing apparatus having a display.

The term "site" refers to a location where activity takes place. In the present embodiment, a conference room is used as an example of a site. The conference room is a room used mainly for conferences. A conference is also referred to as a meeting, a session, a gathering, an assembly, a get-together, a briefing, or the like.

The term "device" refers to a piece of equipment that is not a general-purpose communication terminal 30 such as a PC or a smartphone. In one example, the device is an image capturing apparatus or an apparatus for viewing a wide-view image. In the present embodiment, examples of the device include the image capturing apparatus 10, the smart glasses 88, and the VR goggles 89.

The term "point-of-view information" refers to parameter information that specifies which predetermined area in a wide-view image to be displayed on the display is to be displayed on the display. In the present embodiment, in one example, a radius vector, a polar angle, and an azimuth angle of the center of the wide-view image to be displayed on the display are described as examples of the point-of-view information. In another example, the point-of-view information may be specified by other parameter information such as the coordinates of diagonal vertices.

The term "image" refers to a representation of a visually recognizable event that is fixed on a medium. The term "video" refers to an image displayed on a display device, and may include an image that changes over time or may include audio output over time.

The term "wide-view image" refers to an image having a wide viewing angle obtained by capturing a wide imaging range using a predetermined imaging method. Examples of the wide-view image may include a 360-degree image that is a captured image of the entire 360-degree surroundings, and the 360-degree image is also referred to as a spherical image, an omnidirectional image, or an "all-around" image.

The wide-view image includes an image of a range wider than a display range that can be displayed on the display at a time in a predetermined display method. The wide-view image has a display range corresponding to a field of view of up to 360 degrees in the vertical direction and a field of view of up to 360 degrees in the horizontal direction. In an example, the wide-view image is an image having a display range corresponding to a field of view of less than 360 degrees in the vertical and horizontal directions as long as the wide-view image has a viewing angle in a wider range than the display range that can be displayed on the display at a time. The wide-view image also includes an image having a display range wider than a range that can be visually recognized at a time by a person looking at the range. Depending on the display method, an image that can be displayed on the display at a time is also included in the wide-view image as long as the image has a wide range of viewing angles in a predetermined display method. In the present embodiment, a spherical image in equirectangular projection format is used as an example of a wide-view image. Other examples of the wide-view image include an omnidirectional image, a hemispherical image, a three-dimensional (3D) panoramic image, a two-dimensional (2D) panoramic image, and a VR image.

An image having a normal angle of view is not a wide-view image. In the present embodiment, such an image is referred to as a non-wide-view image, that is, a planar image.

The term "virtual room" refers to a virtual space provided for sharing (distributing) content such as a wide-view image among users. In a normal space, when users enter the same room, the users can share content. Thus, in the present embodiment, the term "virtual room" is used to describe an area for sharing content. The term "virtual" refers to being implemented by information processing via a network.

Users at respective sites perform remote communication across remote locations. The remote communication is a meeting, which is an online meeting, accessible from remote locations, or sites. The meeting refers to a gathering of people for consultation, discussion, or the like. Examples of the meeting include, but are not limited to, serving a customer, a conference, an assembly, a briefing, a study session, a class, a seminar, and a presentation. The remote communication is not necessarily bidirectional communication. Thus, the virtual room may be referred to as a virtual conference room.

In the present embodiment, a service provider provides users with a virtual room for performing remote communication. The users use the virtual room to perform remote communication. Some users may desire to use the virtual room for various purposes.

For example, in a business plan for building a house or the like, a user may desire to use a virtual room in a plurality of steps included in the business plan. In this case, the user may use a single virtual room in a plurality of steps. However, when a virtual room is used in a plurality of steps, even content to be managed for each step may be shared across the plurality of steps. When the user makes a contract for a virtual room for each step, content can be managed for each step. However, an increase in cost may be incurred if the user desires to complete one business plan using a single virtual room or if the user makes a contract for a plurality of virtual rooms.

That is, in conventional content management methods, it is difficult to classify content in accordance with a gathering of users or a period of time and manage users authorized to view for each classified item of the content.

Accordingly, in the present embodiment, the concept of a "virtual project" is employed. The information processing system 50 sets at least one virtual project for a virtual room. The virtual project is associated with at least one terminal among the plurality of communication terminals 30, a user, a team, a group, a department, an organization, a task, and the like. In one example, the target to be associated with the virtual project is determined as desired based on the user's operation of the virtual project.

The virtual project represents a gathering of users set for the virtual room. For example, a virtual project is provided for each of a plurality of steps included in a business plan. Then, the communication terminal 30 of a user related to the step is set for the virtual project.

For example, the information processing system 50 permits the communication terminal 30 associated with the virtual project to view content associated with the virtual project. Further, the information processing system 50 prohibits the communication terminal 30 set for a first virtual project associated with a virtual room from viewing content classified into a second virtual project associated with the virtual room. In other words, the information processing system 50 prohibits even a user who can enter a virtual room from viewing content associated with a virtual project different from a virtual project associated with the user.

While the present embodiment describes permitting the communication terminal 30 or the like associated with a virtual project to view content, by way of example but not limitation, the communication terminal 30 or the like may also be allowed to edit the content or to share the content with another project. That is, the information processing system 50 may allow the communication terminal 30 or the like associated with a virtual project to share content associated with the virtual project (or may control the availability of such content to the communication terminal 30 or the like).

Accordingly, the information processing system 50 performs user access control for each virtual project, such as separating users who use content for each virtual project.

This configuration allows a user associated with a virtual project to view content associated with the virtual project or enter a virtual room associated with the virtual project to participate in streaming distribution via the communication terminal 30.

### Example Configuration of Communication System

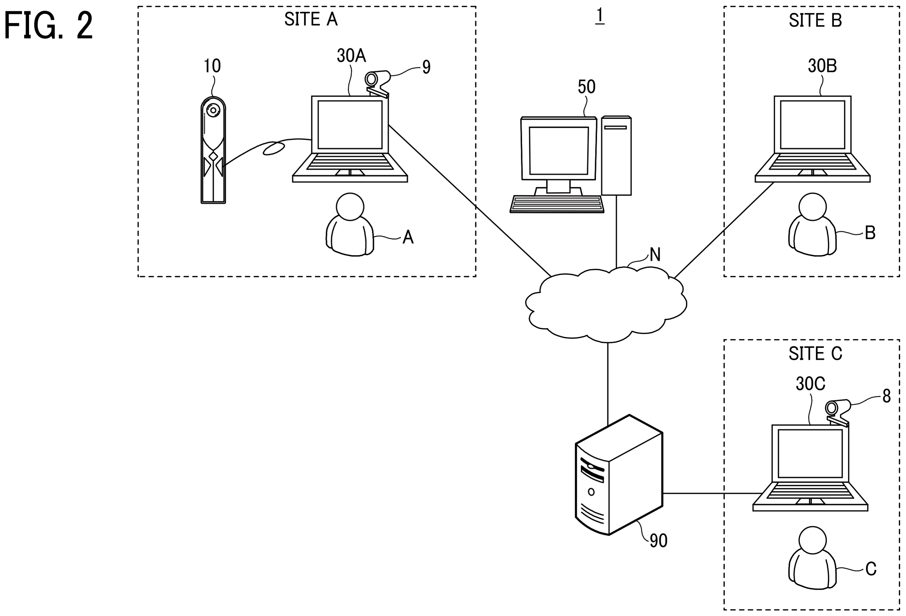

FIG. 2 is a diagram illustrating an example schematic configuration of the communication system 1. The communication system 1 is a system for transmitting and receiving a wide-view image captured by the image capturing apparatus 10 or an image having a normal angle of view bidirectionally across a plurality of sites. In the communication system 1, an image distributed from one of the sites is displayed at the other sites and is viewable to users at the other sites. In an example, a spherical image captured by the image capturing apparatus 10 is distributed as the wide-view image. In the communication system 1, for example, a wide-view image captured at a predetermined site is remotely viewable at another site.

In the communication system 1, as illustrated in FIG. 2, the image capturing apparatus 10 and the communication terminal 30A placed at the site A, the information processing system 50, and the communication terminals 30B and 30C placed at a plurality of sites, namely, the sites B and C, respectively, are communicably connected to each other.

In a case where the image capturing apparatus 10 is directly connectable to the communication network N, the communication terminal 30A, serving as a relay device (e.g., a router), does not use the relay function. In this case, the communication terminal 30A is connected to the communication network N irrespective of the image capturing apparatus 10. In a case where the communication terminal 30A is placed at the site A, the communication terminal 30A also functions as a relay device, and the user A can view a wide-view image in a manner similar to that of the communication terminals 30B and 30C. The image capturing apparatus 10 may additionally be placed at a site other than the site A, or a plurality of image capturing apparatuses 10 may be placed at the site A.

Each communication terminal 30 and the information processing system 50 can communicate with each other via the communication network N. The communication network N includes the Internet, a mobile communication network, and a local area network (LAN), for example. The communication network N may include a wired communication network and a wireless communication network. The wireless communication network may be based on a wireless communication standard such as third generation (3G), fourth generation (4G), fifth generation (5G), Wireless Fidelity (Wi-Fi^{®}), Worldwide Interoperability for Microwave Access (WiMAX), or Long Term Evolution (LTE).

The image capturing apparatus 10 is a special digital camera configured to capture an image of an object and/or surroundings such as scenery to obtain two hemispherical images, from which a spherical image is generated, as described below. The wide-view image obtained by the image capturing apparatus 10 may be a moving image or a still image, or may include both a moving image and a still image. Further, the captured image may be video including an image and audio.

The communication terminal 30 is a computer such as a PC to be operated by a user at each site. The communication terminal 30 displays an image captured at the site where the communication terminal 30 is placed, and a wide-view image (still image and/or moving image) and an image having a normal angle of view, which are distributed from other sites. For example, the communication terminal 30 acquires a wide-view image, which is captured by the image capturing apparatus 10, via the communication network N. The communication terminal 30 has installed therein software for executing image processing, such as Open Graphics Library for Embedded Systems (OpenGL ES), and can display an image based on point-of-view information that specifies a partial area in the wide-view image. OpenGL ES is an example of software for executing image processing. Any other software may be used. In an example, the communication terminal 30 does not have installed therein software for executing image processing, and executes image processing by using software received from the outside or receives a result of image processing executed by external software to display an image. That is, the communication terminal 30 can display a predetermined area, which is a portion of the wide-view image.

The communication terminal 30 can change the point of view for the display range of the wide-view image, as desired, in response to the user's operation. The communication terminal 30 shifts the virtual point of view in accordance with a user operation input (such as key input, dragging, or scrolling) on a touch panel, a direction button, a mouse, a keyboard, a touch pad, or the like to change and display a visual field range (predetermined area) based on point-of-view information corresponding to the shifted point of view. In an example, the communication terminal 30 is a communication terminal to be worn by the user, such as VR goggles. In response to a change in the movement of the user wearing the communication terminal 30, position information of the communication terminal 30 is changed. In response to detection of the change in the position information, the virtual point of view is shifted in accordance with the detected position information to change a visual field range (predetermined area), based on point-of-view information corresponding to the shifted point of view, and the changed visual field range (predetermined area) is displayed.

The communication terminal 30A acquires a wide-view image from the image capturing apparatus 10 via a wired cable such as a Universal Serial Bus (USB) cable and distributes the acquired wide-view image to the communication terminal 30 at another site via the information processing system 50. The connection between the image capturing apparatus 10 and the communication terminal 30A may be either a wired connection using a wired cable or a wireless connection using short-range wireless communication, for example. A plurality of communication terminals 30A may be placed at the site A.

In an example, the user A at the site A wears the smart glasses 88, and the smart glasses 88 are connected to the communication network N. In this case, an image captured by the smart glasses 88 may be transmitted to the information processing system 50 via the communication network N, and the information processing system 50 may distribute the image to the communication terminal 30 at each site.

The communication terminal 30B is placed at the site B where the user B is located, and the communication terminal 30C is placed at the site C where the user C is located. A plurality of communication terminals 30B may be placed at the site B, and a plurality of communication terminals 30C may be placed at the site C. The users B and C may carry the communication terminals 30B and 30C, respectively.

Each of the communication terminals 30A to 30C at the sites A to C can be internally or externally provided with the image capturing apparatus 8 or 9. Each of the communication terminals 30A to 30C can distribute an image of the corresponding one of the sites A to C, which is captured by the image capturing apparatus 8 or 9 thereof, to the other sites. Any device may be placed at each of the sites A to C.

The arrangement of the terminals and apparatuses (i.e., the communication terminals 30 and the image capturing apparatuses 8, 9, and 10) and the users A to C illustrated in FIG. 2 is an example. Any other arrangement may be used. Examples of the communication terminal 30 are not limited to a PC, but include a tablet terminal, a smartphone, a wearable terminal, a projector, an interactive white board (IWB), and a telepresence robot. The IWB is an electronic whiteboard with mutual communication capability. The communication terminal 30 is any computer on which a web browser or an application dedicated to an image distribution service operates.

In an example, the image capturing apparatus 10 includes a display and displays an image distributed from another site on the display.

The information processing system 50 includes one or more information processing apparatuses. The information processing system 50 manages and controls communication among the image capturing apparatus 10 and the communication terminals 30 at the respective sites and manages a wide-view image to be transmitted and received. The information processing system 50 provides a platform on which a function of providing an image distribution service for distributing a wide-view image is available. The platform may be made available to a person, a company, or any other service provider that desires to provide an image distribution service, under contract. A service provider that provides an image distribution service to a user by using a platform is hereinafter referred to as a platform contractor.

The information processing system 50 may publish an application programming interface (API) as a platform, and the platform contractor may use the API to provide various image distribution services. The platform contractor mainly develops software such as an application for calling the API or the screen to be displayed on the communication terminal 30. That is, the functions to be provided by the API, such as image distribution, are not developed from scratch.

The information processing system 50 may be implemented by a single computer or a plurality of computers such that the components (functions or means) of the information processing system 50 are divided into and assigned to the plurality of computers as appropriate. All or some of the functions of the information processing system 50 may be implemented by a server computer residing in a cloud environment or a server computer residing in an on-premise environment.

The external storage 90 is a storage device separate from the information processing system 50. The external storage 90 may be an external storage (or cloud or on-premise storage), or may be a storage included in the information processing system 50.

### Example Hardware Configuration

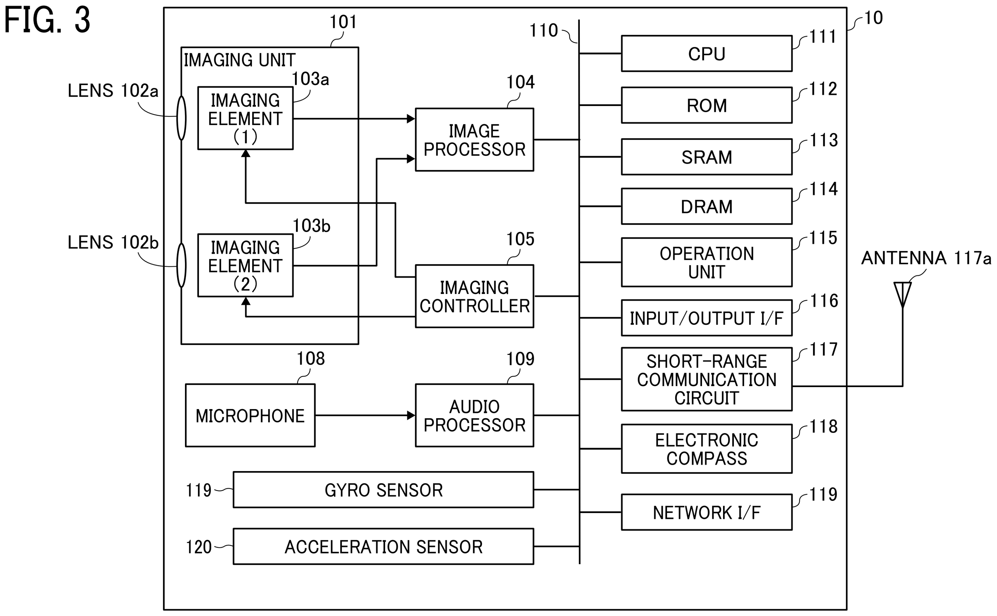

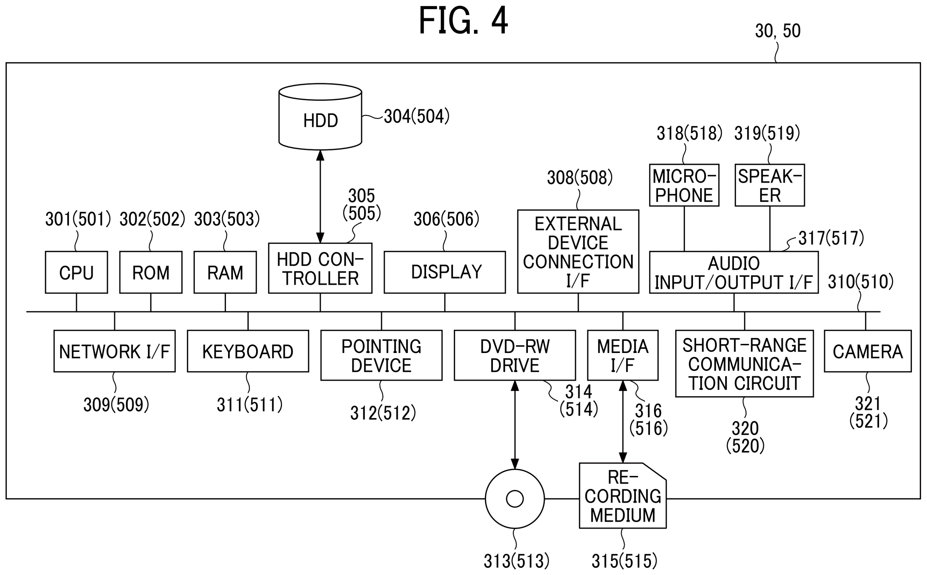

Next, the hardware configuration of each apparatus or terminal included in the communication system 1 according to the present embodiment will be described with reference to FIG. 3 or 4. In the hardware configurations illustrated in FIGs. 3 and 4, a certain hardware element may be added or deleted as appropriate.

### Hardware Configuration of Image Capturing Apparatus

First, the hardware configuration of the image capturing apparatus 10 will be described with reference to FIG. 3. FIG. 3 is a diagram illustrating an example hardware configuration of the image capturing apparatus 10. In the following description, the image capturing apparatus 10 is a spherical (omnidirectional) image capturing apparatus including two imaging elements. In some embodiments, the image capturing apparatus 10 includes any number of imaging elements, provided that the image capturing apparatus 10 includes at least two imaging elements. In one example, the image capturing apparatus 10 is not dedicated to omnidirectional image capturing, and an external omnidirectional image capturing unit may be attached to a general-purpose digital camera, a smartphone, or the like to implement functions that are substantially the same as those of the image capturing apparatus 10.

As illustrated in FIG. 3, the image capturing apparatus 10 includes an imaging unit 101, an image processor 104, an image controller 105, a microphone 108, an audio processor 109, a central processing unit (CPU) 111, a read only memory (ROM) 112, a static random access memory (SRAM) 113, a dynamic random access memory (DRAM) 114, an operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121.

The imaging unit 101 includes two wide-angle lenses (so-called fish-eye lenses) 102a and 102b (collectively referred to as a lens 102 unless distinguished), each having an angle of view of greater than or equal to 180 degrees so as to form a hemispherical image. The imaging unit 101 further includes two imaging elements 103a and 103b corresponding to the lenses 102a and 102b, respectively. Each of the imaging elements 103a and 103b includes an image sensor such as a complementary metal oxide semiconductor (CMOS) sensor or a charge-coupled device (CCD) sensor, a timing generation circuit, and a group of registers. The image sensor converts an optical image formed by the lens 102a or 102b into an electric signal and outputs image data. The timing generation circuit generates horizontal or vertical synchronization signals, pixel clocks, and the like for the image sensor. In the group of registers, various commands, parameters, and the like for an operation of the imaging element 103a or 103b are set. As a non-limiting example, the imaging unit 101 includes two wide-angle lenses. The imaging unit 101 may include one wide-angle lens or three or more wide-angle lenses.

Each of the imaging elements 103a and 103b of the imaging unit 101 is connected to the image processor 104 via a parallel I/F bus. Further, each of the imaging elements 103a and 103b of the imaging unit 101 is connected to the image controller 105 via a serial I/F bus such as an inter-integrated circuit (I2C) bus. The image processor 104, the image controller 105, and the audio processor 109 are connected to the CPU 111 via a bus 110. The ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires respective items of image data output from the imaging elements 103a and 103b via the parallel I/F buses and performs predetermined processing on the items of image data. Thereafter, the image processor 104 combines the items of image data to generate data of an equirectangular projection image described below.

The image controller 105 usually functions as a master device while each of the imaging elements 103a and 103b usually functions as a slave device. The image controller 105 sets commands and the like in the group of registers of each of the imaging elements 103a and 103b via the I2C bus. The image controller 105 receives various commands from the CPU 111. The image controller 105 further acquires status data and the like of the group of registers of each of the imaging elements 103a and 103b via the I2C bus. The image controller 105 sends the acquired status data and the like to the CPU 111.

The image controller 105 instructs the imaging elements 103a and 103b to output the image data at the time when a shutter button of the operation unit 115 is pressed. In an example, the image capturing apparatus 10 displays a preview image or a moving image (movie) on a display. Examples of the display include a display of a smartphone or any other external terminal that performs short-range communication with the image capturing apparatus 10 through the short-range communication circuit 117. In the case of displaying a movie, image data are continuously output from the imaging elements 103a and 103b at a predetermined frame rate (expressed in frames per minute).

As described below, the image controller 105 operates in cooperation with the CPU 111 to synchronize the time when the imaging element 103a outputs image data and the time when the imaging element 103b outputs image data. In the present embodiment, the image capturing apparatus 10 does not include a display unit (or display). In another embodiment, the image capturing apparatus 10 may include a display unit. The microphone 108 converts sound to audio (signal) data. The audio processor 109 acquires the audio data output from the microphone 108 via an I/F bus and performs predetermined processing on the audio data.

The CPU 111 controls the overall operation of the image capturing apparatus 10 and performs predetermined processing.

The ROM 112 stores various programs to be executed by the CPU 111. Each of the SRAM 113 and the DRAM 114 operates as a work memory to store programs to be executed by the CPU 111 or data being currently processed. More specifically, in one example, the DRAM 114 stores image data currently processed by the image processor 104 and data of the equirectangular projection image on which processing has been performed.

The operation unit 115 collectively refers to various operation buttons such as a shutter button, a power switch, a touch panel having both the display and operation functions, and the like. The user operates the operation unit 115 to input various image capturing modes or image capturing conditions.

The input/output I/F 116 collectively refers to an interface circuit such as a USB I/F that allows the image capturing apparatus 10 to communicate with an external medium such as a Secure Digital (SD) card or an external personal computer. The input/output I/F 116 may be either wired or wireless. The data of the equirectangular projection image, which is stored in the DRAM 114, is stored in the external medium via the input/output I/F 116 or transmitted to an external terminal (apparatus) via the input/output I/F 116, as desired.

The short-range communication circuit 117 communicates with the external terminal (apparatus) via the antenna 117a of the image capturing apparatus 10 by short-range wireless communication technology such as near field communication (NFC), Bluetooth^{®}, or Wi-Fi^{®}. The short-range communication circuit 117 can transmit the data of the equirectangular projection image to the external terminal (apparatus).

The electronic compass 118 calculates an orientation of the image capturing apparatus 10 from the Earth's magnetism and outputs orientation information. The orientation information is an example of related information (metadata) in compliance with exchangeable image file format (Exif). The orientation information is used for image processing such as image correction of a captured image. The related information also includes data of a date and time when the image was captured, and data of a data size of image data. The gyro sensor 119 detects changes in orientation of the image capturing apparatus 10, including roll, pitch, and yaw angles, as the image capturing apparatus 10 moves. The change in orientation is one example of related information (metadata) in compliance with Exif. This information is used for image processing such as image correction of a captured image. The acceleration sensor 120 detects acceleration in three axial directions. The image capturing apparatus 10 calculates the position of the image capturing apparatus 10 (e.g., the tilt of the image capturing apparatus 10 relative to the direction of gravity), based on the acceleration detected by the acceleration sensor 120. The gyro sensor 119 and the acceleration sensor 120 of the image capturing apparatus 10 improve the accuracy of image correction.

The network I/F 121 is an interface for performing data communication using the communication network N, such as the Internet, via a router or the like.

### Hardware Configuration of Communication Terminal

FIG. 4 is a diagram illustrating an example hardware configuration of the communication terminal 30 and the information processing system 50. First, the communication terminal 30 will be described. Each hardware element of the communication terminal 30 is denoted by a reference numeral in 300 series. The communication terminal 30 is implemented by one or more computers. As illustrated in FIG. 4, the communication terminal 30 includes a CPU 301, a ROM 302, a RAM 303, a hard disk (HD) 304, a hard disk drive (HDD) controller 305, a display 306, an external device connection I/F 308, a network I/F 309, a bus line 310, a keyboard 311, a pointing device 312, a digital versatile disc rewritable (DVD-RW) drive 314, a media I/F 316, an audio input/output I/F 317, a microphone 318, a speaker 319, a short-range communication circuit 320, and a camera 321.

The CPU 301 controls the overall operation of the communication terminal 30. The ROM 302 stores a program used for booting the CPU 301, such as an initial program loader (IPL). The RAM 303 is used as a work area for the CPU 301. The HD 304 stores various types of data such as a program. The HDD controller 305 controls reading or writing of various types of data from or to the HD 304 under the control of the CPU 301. The display 306 displays various types of information such as a cursor, a menu, a window, characters, and an image. The display 306 is an example of a display unit. In one example, the display 306 is a touch panel display provided with input means. The external device connection I/F 308 is an interface for connecting to various external devices. The external devices include, but are not limited to, a USB memory and a printer. The network I/F 309 is an interface for performing data communication using the communication network N. The bus line 310 is, for example, an address bus or a data bus for electrically connecting the hardware elements illustrated in FIG. 4, such as the CPU 301, to each other.

The keyboard 311 is an example of input means including a plurality of keys for inputting characters, numerical values, various instructions, and the like. The pointing device 312 is an example of input means used for selecting or executing various instructions, selecting a target for processing, or moving a cursor being displayed. The input means are not limited to the keyboard 311 and the pointing device 312 and may include a touch panel and an audio input device. The DVD-RW drive 314 controls reading or writing of various types of data from or to a DVD-RW 313, which is an example of a removable recording medium. The DVD-RW 313 is an example, and a digital versatile disk recordable (DVD-R), a Blu-ray Disc^{®}, or any other recording medium may be used instead. The media I/F 316 controls reading or writing (storing) of data from or to a recording medium 315 such as flash memory. The microphone 318 is an example of built-in audio capturing means for receiving audio input. The audio input/output I/F 317 is a circuit for controlling input and output of audio signals between the microphone 318 and the speaker 319 under the control of the CPU 301. The short-range communication circuit 320 communicates with an external terminal (apparatus) using short-range wireless communication technology such as NFC, Bluetooth^{®}, or Wi-Fi^{®}. The camera 321 is an example of built-in image capturing means for capturing an image of an object to obtain image data. In one example, the microphone 318, the speaker 319, and the camera 321 are devices external to the communication terminal 30 as an alternative to built-in devices.

### Hardware Configuration of Information Processing System

As illustrated in FIG. 4, each hardware element of the information processing system 50 is denoted by a reference numeral in 500 series in parentheses. The information processing system 50 is implemented by one or more computers and has substantially the same configuration as that of the communication terminal 30, as illustrated in FIG. 4, and thus the description of the hardware elements of the information processing system 50 will be omitted.

Each of the programs described above may be recorded as a file in a format installable or executable on a computer-readable recording medium for distribution. Examples of the recording medium include a compact disc recordable (CD-R), a digital versatile disc (DVD), a Blu-ray Disc^{®}, an SD card, and a USB memory. The recording medium may be provided in the form of a program product to domestic or foreign users. For example, the communication terminal 30 executes a program according to an embodiment of the present disclosure to implement an image display method according to an embodiment of the present disclosure.

### Wide-View Image and Point-of- View Information

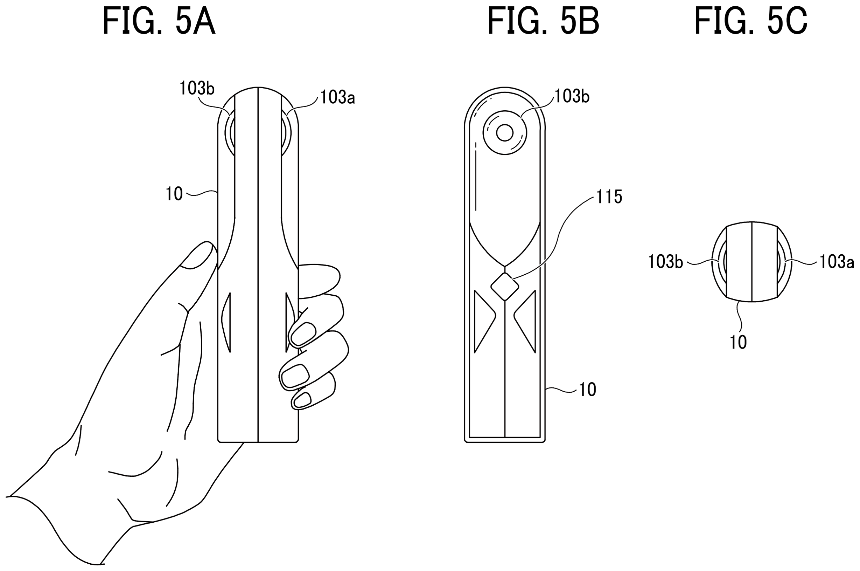

A method for generating a wide-view image (spherical image) will be described hereinafter with reference to FIGs. 5A to 12.

First, the external appearance of the image capturing apparatus 10 will be described with reference to FIGs. 5A to 5C. The image capturing apparatus 10 is a digital camera for capturing images from which a 360-degree spherical image is generated. FIG. 5A is a left side view of the image capturing apparatus 10. FIG. 5B is a front view of the image capturing apparatus 10. FIG. 5C is a plan view of the image capturing apparatus 10. The illustrated external view of the image capturing apparatus 10 is merely an example. The image capturing apparatus 10 may have any other external appearance.

As illustrated in FIG. 5A, the image capturing apparatus 10 has a size such that a person can hold the image capturing apparatus 10 with one hand. The illustrated shape of the image capturing apparatus 10 is an example. The image capturing apparatus 10 may have any other shape. As illustrated in FIGs. 5A, 5B, and 5C, the imaging element 103a and the imaging element 103b are disposed in an upper portion of the image capturing apparatus 10 such that the imaging element 103a is disposed on the front side and the imaging element 103b is disposed on the back side. The imaging elements (image sensors) 103a and 103b are used in combination with optical members (e.g., the lenses 102a and 102b described above), each being configured to capture a hemispherical image having an angle of view of greater than or equal to 180 degrees. As illustrated in FIG. 5B, the operation unit 115, such as a shutter button, is disposed on the back surface of the image capturing apparatus 10. As described above, the image capturing apparatus 10 may include one imaging element or three or more imaging elements.

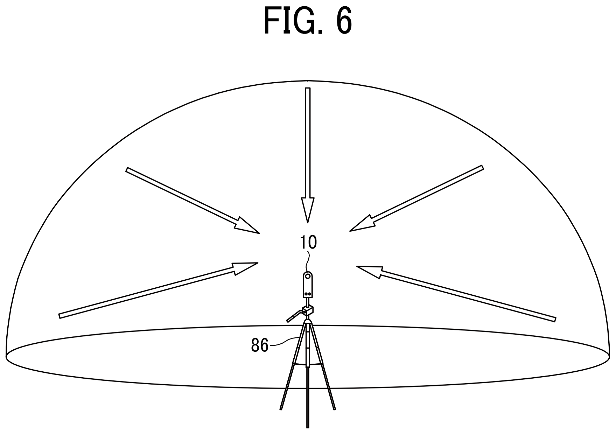

Next, an example of use of the image capturing apparatus 10 will be described with reference to FIG. 6. FIG. 6 is an illustration of an example of how the image capturing apparatus 10 is used. As illustrated in FIG. 6, for example, the image capturing apparatus 10 is used for capturing an image of an object surrounding the image capturing apparatus 10. Each of the imaging elements 103a and 103b illustrated in FIGs. 5A to 5C captures an image of an object surrounding the image capturing apparatus 10. As a result, two hemispherical images are obtained.

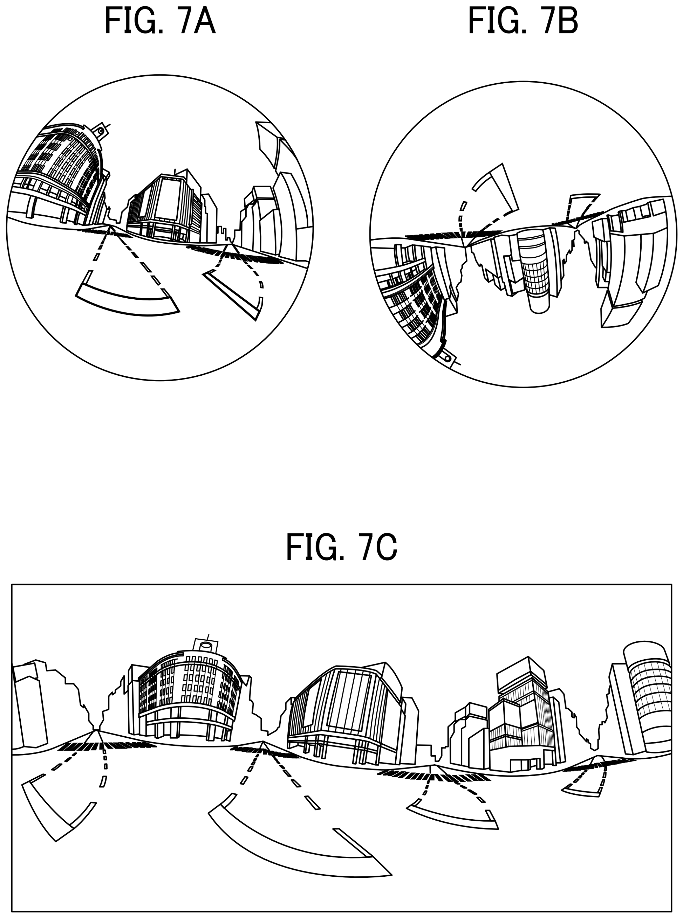

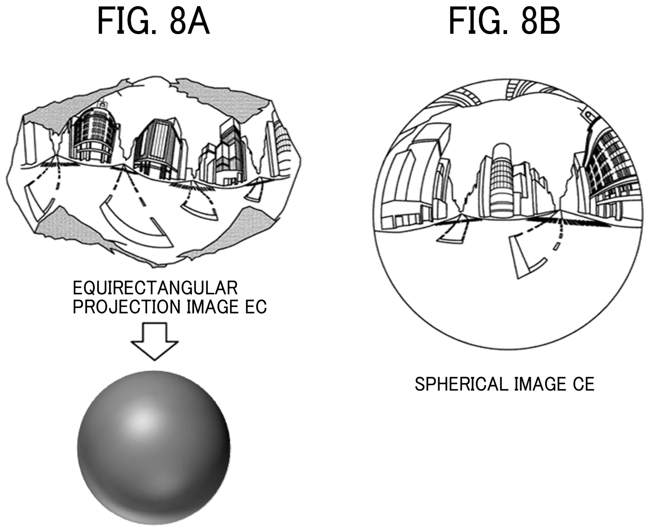

Next, an overview of a process for generating a spherical image from images captured by the image capturing apparatus 10 will be described with reference to FIGs. 7A to 7C and FIGs. 8A and 8B. FIG. 7A illustrates a hemispherical image (front side) captured by the image capturing apparatus 10. FIG. 7B illustrates a hemispherical image (back side) captured by the image capturing apparatus 10. FIG. 7C illustrates an image in equirectangular projection (hereinafter referred to as an "equirectangular projection image" or an "equidistant cylindrical projection image"). FIG. 8A conceptually illustrates how the equirectangular projection image is mapped to a surface of a sphere. FIG. 8B illustrates a spherical image.

As illustrated in FIG. 7A, an image obtained by the imaging element 103a is a curved hemispherical image (front side) captured through the lens 102a described above. As illustrated in FIG. 7B, an image captured by the imaging element 103b is a curved hemispherical image (back side) captured through the lens 102b described above. The image capturing apparatus 10 combines the hemispherical image (front side) and the hemispherical image (back side), which are flipped by 180 degrees, to create an equirectangular projection image EC as illustrated in FIG. 7C.

The image capturing apparatus 10 uses software such as OpenGL ES to map the equirectangular projection image EC to a sphere so as to cover the surface of the sphere, as illustrated in FIG. 8A. As a result, the image capturing apparatus 10 generates a spherical image (or spherical panoramic image) CE as illustrated in FIG. 8B. That is, the spherical image CE is represented as the equirectangular projection image EC, which corresponds to a surface facing the center of the sphere. OpenGL ES is a graphics library used for visualizing 2D data and 3D data. OpenGL ES is an example of software for executing image processing. Any other software may be used to create the spherical image CE. The spherical image CE may be either a still image or a moving image.

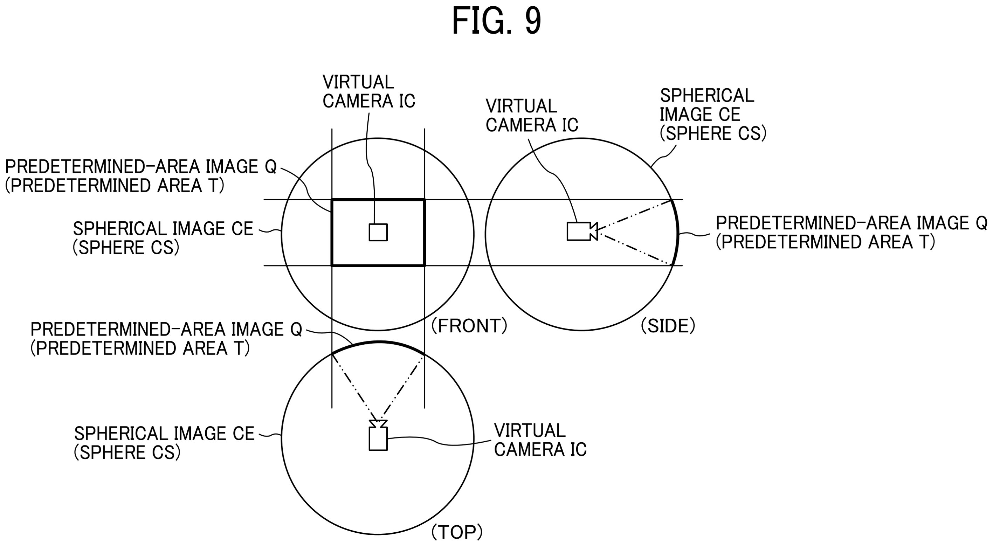

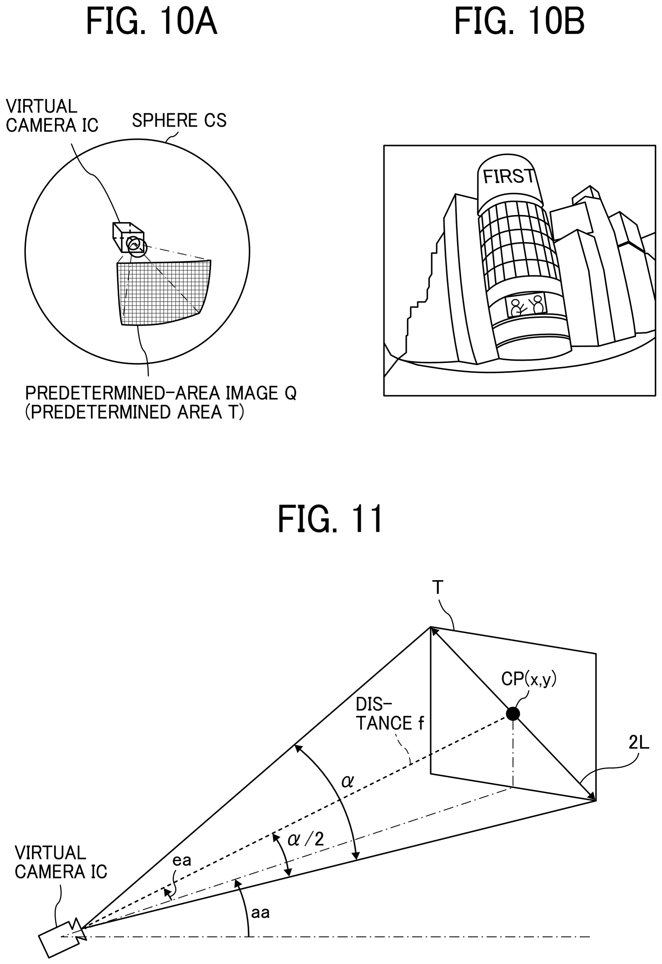

As described above, since the spherical image CE is an image mapped to a sphere in such a manner as to cover the surface of the sphere, part of the image may look distorted when viewed by a user, providing a strange feeling. Accordingly, the image capturing apparatus 10 displays an image of a predetermined area T, which is part of the spherical image CE, as a planar image having fewer curves to make the user feel comfortable. The predetermined area is, for example, a part of the spherical image CE that is viewable by the user. In this disclosure, the image of the predetermined area, which is viewable, may be referred to as a "predetermined-area image" or "viewable-area image" Q. That is, the terms "predetermined-area image" and "viewable-area image" may be used interchangeably. The display of the predetermined-area image will be described with reference to FIGs. 9, 10A, and 10B.

FIG. 9 is a diagram illustrating the position of a virtual camera IC and the position of the predetermined area T in a case where the spherical image CE is of a three-dimensional sphere CS. The virtual camera IC corresponds to a position of a point of view (viewpoint) of a user who is viewing the spherical image CE represented as a surface area of the three-dimensional solid sphere CS. FIG. 10A is a perspective view of the virtual camera IC and the predetermined area T illustrated in FIG. 9, and FIG. 10B is a diagram illustrating a predetermined-area image displayed on a display. In FIG. 10A, the spherical image CE illustrated in FIG. 9 is represented by the three-dimensional sphere CS. Assuming that the spherical image CE generated in the way described above is a surface area of the sphere CS, the virtual camera IC is inside the spherical image CE as illustrated in FIG. 9. The predetermined area T in the spherical image CE is an imaging area of the virtual camera IC. Specifically, the predetermined area T is specified by predetermined-area information indicating an imaging direction and an angle of view of the virtual camera IC in a three-dimensional virtual space containing the spherical image CE. Zooming in or out of the predetermined area T may be implemented by bringing the virtual camera IC closer to or farther away from the spherical image CE. The predetermined-area image Q is an image of the predetermined area T in the spherical image CE. The predetermined area T is defined by an angle of view α of the virtual camera IC and a distance f from the virtual camera IC to the spherical image CE (see FIG. 11).

The predetermined-area image Q illustrated in FIG. 10A is displayed on a predetermined display as an image of the imaging area of the virtual camera IC, as illustrated in FIG. 10B. The image illustrated in FIG. 10B is a predetermined-area image represented by predetermined-area information that is set by default. A description will be made using the imaging direction (ea, aa) and the angle of view (α) of the virtual camera IC. In another example, the predetermined area T is not defined by the angle of view α and the distance f, and the imaging area of the virtual camera IC, which is the predetermined area T, is identified by position coordinates (X, Y, Z).

Next, the relationship between the predetermined-area information and the image of the predetermined area T will be described with reference to FIG. 11. FIG. 11 is a diagram illustrating the relationship between the predetermined-area information and the image of the predetermined area T. As illustrated in FIG. 11, "ea" denotes an elevation angle, "aa" denotes an azimuth angle, and "α" denotes an angle of view of the virtual camera IC. The position of the virtual camera IC is adjusted such that the point of gaze of the virtual camera IC, indicated by the imaging direction (ea, aa), matches a center point CP (x, y) of the predetermined area T serving as the imaging area of the virtual camera IC. As illustrated in FIG. 11, the center point CP (x, y) of the predetermined area T, whose diagonal angle of view is represented by the angle of view α of the virtual camera IC and is denoted by α, is used as a parameter (x, y) of the predetermined-area information. The predetermined-area image Q is an image of the predetermined area T in the spherical image CE. The distance f is the distance from the virtual camera IC to the center point CP (x, y) of the predetermined area T. The distance between the center point CP (x, y) and a given vertex of the predetermined area T is denoted by "L" (2L is a diagonal line). In FIG. 11, a trigonometric function generally expressed by Equation (1) below holds. $L / f = tan \left(\frac{α}{2}\right)$

The image capturing apparatus 10 described above is an example of an image capturing apparatus for acquiring a wide-view image. The spherical image CE is an example of a wide-view image. The wide-view image is generally an image captured with a wide-angle lens such as a lens that can capture an image of a range wider than a range that the human eye can perceive.

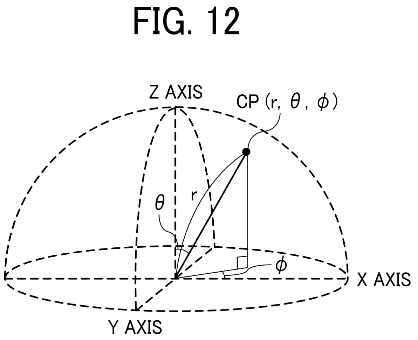

FIG. 12 is a diagram illustrating the relationship illustrated in FIG. 11 using a point in a three-dimensional Euclidean space defined in spherical coordinates. The center point CP illustrated in FIG. 11 is represented by a spherical polar coordinate system to obtain position coordinates (r, θ, φ). The position coordinates (r, θ, φ) represent a radius vector, a polar angle, and an azimuth angle, respectively. The radius vector r is the distance from the origin of the three-dimensional virtual space including the spherical image CE to the center point CP. Accordingly, the radius vector r is equal to the distance f illustrated in FIG. 11. FIG. 12 illustrates the relationship illustrated in FIG. 11. In the following description, the position coordinates (r, θ, φ) of the virtual camera IC are used as an example of point-of-view information. As described above, the point-of-view information is any parameter information that can define the predetermined area T (the predetermined-area image Q) displayed on the predetermined display illustrated in FIG. 10A as the image of the imaging area of the virtual camera IC. The point-of-view information includes the coordinates of the diagonal vertices of the predetermined area T. In an example, the point-of-view information includes information indicating the angle of view α of the virtual camera IC and information indicating the center point CP (x, y), which have been described with reference to FIG. 11. Examples of the point-of-view information include position coordinate information in the form of spherical coordinates, position coordinate information in the form of orthogonal coordinates, and a difference value between the predetermined-area information that is set by default and the coordinates. Other examples of the point-of-view information include information other than coordinate information, such as an angle and a distance, as illustrated in FIG. 11. In FIGs. 11 and 12, the center point CP of the predetermined area T is used as a reference. In another example, the predetermined area T may be defined by parameter information with any one of the vertices of the predetermined area T as a reference. In the foregoing description of the point-of-view information, as a non-limiting example, the wide-view image is a spherical image. In another wide-view image, information that defines the predetermined area T in the other wide-view image is point-of-view information.

### Functions

Next, the functional configuration of the communication system 1 according to the present embodiment will be described with reference to FIG. 13. FIG. 13 is a diagram illustrating an example functional configuration of the communication system 1 according to the present embodiment. FIG. 13 illustrates functions, related to processes or operations described below, of the terminals, the apparatuses, and the server illustrated in FIG. 1.

### Functional Configuration of Image Capturing Apparatus

First, the functional configuration of the image capturing apparatus 10 will be described with reference to FIG. 13. The image capturing apparatus 10 includes a communication unit 11, an acceptance unit 12, an imaging processing unit 13, an analysis unit 14, a registration request unit 15, a connection unit 16, a storage processing unit 17, an image transmission control unit 18, and a storing/reading unit 19. Each unit is a function or means implemented by or caused to function by one or more of the hardware elements illustrated in FIG. 3 operating in accordance with instructions from the CPU 111 according to a program loaded onto the SRAM 113 or the DRAM 114. The image capturing apparatus 10 further includes a storage unit 1000, which is implemented by, for example, the ROM 112 illustrated in FIG. 3.

The communication unit 11 has a function of connecting to the communication network N by using wireless communication technology such as Wi-Fi^{®} to transmit and receive various types of data or information to and from another apparatus. In the present embodiment, the connection unit 16 transmits a wide-view image acquired by the imaging processing unit 13 to the information processing system 50. In another embodiment, the communication unit 11 may transmit the wide-view image to the information processing system 50.

The acceptance unit 12 has a function of receiving an operation input for the image capturing apparatus 10 from the user. The acceptance unit 12 accepts an operation for turning on or off the power, turning on or off the shutter button (start or stop of transmission of a wide-view image), or any other operation.

The imaging processing unit 13 captures an image of an object or surroundings such as scenery and acquires a captured image. The captured image acquired by the imaging processing unit 13 may be either a moving image or a still image, or both. In another example, the captured image may include an image and audio. Further, for example, the imaging processing unit 13 captures an image of a two-dimensional code displayed on the display 306 of the communication terminal 30.

The analysis unit 14 analyzes the two-dimensional code, of which the image is captured by the imaging processing unit 13, to extract information included in the two-dimensional code. The extracted information includes a URL for registering the image capturing apparatus 10 in the virtual room, a temporary ID, and a password.

The registration request unit 15 transmits a request to the information processing system 50 to register the image capturing apparatus 10 in the virtual room in the information processing system 50, by using the information included in the two-dimensional code read by the analysis unit 14.

The connection unit 16 has a function of receiving a supply of power from the communication terminal 30A and performing data communication. The connection unit 16 is implemented by, for example, the short-range communication circuit 117.

The storage processing unit 17 performs processing to store a wide-view image captured in response to an image capturing request from any site in a location specified by a URL (e.g., the external storage 90) transmitted from the information processing system 50.

The image transmission control unit 18 has a function of controlling transmission of a wide-view image to the information processing system 50. For example, the image transmission control unit 18 transmits a captured image acquired by the imaging processing unit 13 to the information processing system 50 periodically or in response to a user operation when the captured image is a still image, or at a predetermined frame rate (expressed in frames per second, or FPS) when the captured image is a moving image. The image transmission control unit 18 also performs switching between the communication unit 11 and the connection unit 16.

The storing/reading unit 19 has a function of storing various types of data in the storage unit 1000 or reading various types of data from the storage unit 1000. The storage unit 1000 stores captured image data acquired by the imaging processing unit 13, an image capturing apparatus ID, and the like. The captured image data stored in the storage unit 1000 may be deleted when a predetermined amount of time has elapsed after the captured image data was acquired by the imaging processing unit 13, or the data transmitted to the information processing system 50 may be deleted from the storage unit 1000.

The image capturing apparatus 10 has installed therein an application (also referred to as a plug-in) for supporting the communication system 1. The application is not used when the image capturing apparatus 10 is a commercially available image capturing apparatus, but otherwise is used to associate the image capturing apparatus 10 with a virtual room or to receive external control. Some of the functions illustrated in FIG. 13, such as the registration request unit 15, are implemented by the application.

### Functional Configuration of Communication Terminal

Next, the functional configuration of the communication terminal 30 will be described with reference to FIG. 13. The communication terminal 30 includes a communication unit 31, an acceptance unit 32, a display control unit 33, an imaging unit 34, a storing/reading unit 35, and a connection unit 36. Each unit is a function or means implemented by or caused to function by one or more of the hardware elements illustrated in FIG. 4 operating in accordance with instructions from the CPU 301 according to a program (either the web browser or a dedicated application) loaded onto the RAM 303. The communication terminal 30 further includes a storage unit 3300, which is implemented by the ROM 302 or the recording medium 315 illustrated in FIG. 4.

The communication unit 31 has a function of connecting to the communication network N and transmitting and receiving various types of data or information to and from another apparatus. The communication unit 31 is implemented by, for example, the network I/F 309.

The acceptance unit 32 has a function of receiving various selections or operation inputs for the communication terminal 30. The display control unit 33 has a function of causing the display 306 of the communication terminal 30 to display a wide-view image, an image having a normal angle of view, and various screens. For example, the display control unit 33 causes the display 306 to display a two-dimensional code transmitted from the information processing system 50. In one example, the two-dimensional code is QR code^{®}, a DataMatrix (DataCode) code, a MaxiCode code, or a PDF417 code. In another example, the two-dimensional code is a barcode.

The connection unit 36 has a function of supplying power to the image capturing apparatus 10 and performing data communication. The connection unit 36 is implemented by, for example, the short-range communication circuit 320.

The storing/reading unit 35 has a function of storing various types of data in the storage unit 3300 or reading various types of data from the storage unit 3300 in accordance with instructions from the CPU 301 illustrated in FIG. 4. The storage unit 3300 includes an image management information storage unit 3301.

### Functional Configuration of Information Processing System

Next, the functional configuration of the information processing system 50 will be described. The information processing system 50 includes a communication unit 51, a screen generation unit 52, an association processing unit 53, an image distribution unit 54, an authentication unit 55, a virtual room control unit 56, a communication control unit 57, a connection management unit 58, a storing/reading unit 59, an API management unit 60, a project setting unit 61, and a determination unit 62. Each unit is a function or means implemented by or caused to function by one or more of the hardware elements illustrated in FIG. 4 operating in accordance with instructions from the CPU 501 according to a program loaded onto the RAM 503. The information processing system 50 further includes a storage unit 5000. The storage unit 5000 is implemented by the ROM 502, the HD 504, or the recording medium 515 illustrated in FIG. 4.

The communication unit 51 has a function of transmitting and receiving various types of data or information to and from another apparatus via the communication network N.

The screen generation unit 52 generates screen information to be displayed on the communication terminal 30. In a case where the communication terminal 30 executes a web application, the screen information is created by Hypertext Markup Language (HTML), Extensible Markup Language (XML), Cascading Style Sheets (CSS), JavaScript^{®}, or any other language. In a case where the communication terminal 30 executes a native application, the screen information is held by the communication terminal 30, and the information to be displayed is transmitted in XML or the like. The screen generation unit 52 generates screen information in which a wide-view image or the like to be distributed by the image distribution unit 54 is arranged.

The association processing unit 53 performs control related to sharing of the point-of-view information of the wide-view image. In response to receipt of an image capturing request together with point-of-view information from the communication terminal 30, the association processing unit 53 performs processing to associate the point-of-view information with a wide-view image acquired from the image capturing apparatus 10 in response to an image capturing request. The association processing unit 53 stores the wide-view image and the point-of-view information, which are associated with each other, in an image management information storage unit 5001. Further, the association processing unit 53 transmits a URL, which is information indicating a storage location where the associated wide-view image and point-of-view information are to be stored, to the communication terminal 30. In one example, the information processing system 50 does not simultaneously receive the point-of-view information and the image capturing request from the communication terminal 30. The information processing system 50 may separately receive the point-of-view information and the image capturing request and perform association processing. The URL is an example of information indicating the storage location. The information indicating the storage location may be in any other format such as a uniform resource identifier (URI).

The image distribution unit 54 distributes, to the communication terminal 30 operated by a user who is in the virtual room, a wide-view image transmitted from the image capturing apparatus 10 associated with the same virtual room. An image having a normal angle of view captured by a camera included in the communication terminal 30 or the image capturing apparatus 8 or 9 connected to the communication terminal 30 is also distributed in a similar manner. The present embodiment enables distribution using the streaming server 95, which is provided externally, in addition to distribution by the image distribution unit 54.

The authentication unit 55 has a function of, based on an authentication request received by the communication unit 51, authenticating the request source. For example, the authentication unit 55 determines whether authentication information (a user ID and a password) included in the authentication request received by the communication unit 51 matches authentication information held in advance to perform user authentication. The authentication information may be a card number of an integrated circuit (IC) card or biometric authentication information such as a face, a fingerprint, or a voiceprint. The authentication unit 55 may perform authentication using an external authentication system or an authentication method such as Open Authorization (OAuth).

The virtual room control unit 56 controls, for example, entry of the communication terminal 30 or a user into a virtual room, and association of a device with a virtual room. In response to successful authentication by the authentication unit 55, the virtual room control unit 56 registers the user ID and the Internet protocol (IP) address of the communication terminal 30 in a virtual room information storage unit 5002 or associates the image capturing apparatus 10 with the virtual room.

The virtual room control unit 56 performs control such that, in response to a plurality of communication terminals 30 entering (or accessing) a virtual room, content associated with the virtual room can be viewed on the plurality of communication terminals 30.

The communication control unit 57 manages the start, establishment, and end of communication with the image capturing apparatus 10 associated with each virtual room. The communication control unit 57 also manages the start, establishment, and end of communication for distributing a wide-view image or audio in response to the communication terminal 30 entering or leaving the virtual room.

The connection management unit 58 manages communication (connection) established with the information processing system 50 by the communication terminal 30 and the image capturing apparatus 10 in association with the virtual room.

The API management unit 60 manages an API to be used by a platform contractor to provide an image distribution service of a wide-view image. In the use of the API, the platform contractor develops software for calling the API. The software to be developed may operate on a server or may operate on a client such as a communication terminal. Any functions of the information processing system 50, such as the image distribution unit 54, the association processing unit 53, and the communication control unit 57, can be provided as an API. A function added to the information processing system 50 later may be provided as an API. To determine whether to provide a function as an API, a communication terminal operated by the platform provider accesses the information processing system 50 and receives the public settings of the API. As a result, the API management unit 60 can control the API based on the public settings. The API management unit 60 may perform an authentication process for checking whether software operating on a requesting entity that makes a request to call the API is software developed by an authorized platform contractor. In a specific example of the authentication process, the information processing system 50 receives, from the software operating on the requesting entity, an application ID issued to the software developed by the platform contractor in advance by the API management unit 60. If the API management unit 60 determines that the application ID matches an application ID stored in a platform contractor information storage unit, the API management unit 60 performs control to permit provision of the API since the software is valid. If the software is not determined to be valid, the API management unit 60 performs control not to permit provision of the API. The application ID is an example of authentication information for determining validity. The API management unit 60 may use authentication information issued in advance by the API management unit 60 of the information processing system 50 or by an external system to check the validity of the requesting entity. Examples of such authentication information as issued in advance include an access token, a ticket, a security key, a password, and a personal identification number (PIN) code. In the present embodiment, while the use of a function of the information processing system 50 as an API is not described, the same process flow is performed, except that software such as an application developed by a platform contractor uses a function of the information processing system 50 through a determination made by the API management unit 60.

The storing/reading unit 59 has a function of storing various types of data in the storage unit 5000 or reading various types of data from the storage unit 5000. The storage unit 5000 includes the image management information storage unit 5001, the virtual room information storage unit 5002, a virtual room authentication information storage unit 5003, a device information storage unit 5004, a virtual project authentication information storage unit 5005, a virtual project period information storage unit 5006, and a content information storage unit 5007.

The project setting unit 61 sets a virtual project for a virtual room. The virtual project includes at least one of the plurality of communication terminals 30.

When content generated by a device associated with a virtual room is to be shared, the determination unit 62 determines the attribution of the content. When content generated by a device associated with a virtual room is to be shared, for example, the determination unit 62 determines whether a virtual project set for the virtual room is found.

The association processing unit 53 performs processing to associate content with a virtual project or a virtual room in accordance with the determination result obtained by the determination unit 62. When the determination unit 62 determines that a virtual project set for the virtual room is found, the association processing unit 53 associates the content with the virtual project. In other words, the content is shared within the virtual project. When the determination unit 62 determines that a virtual project set for the virtual room is not found, the association processing unit 53 associates the content with the virtual room. In other words, the content is shared within the virtual room.

When a virtual project is set by the project setting unit 61, the storing/reading unit 59 stores information related to the set virtual project in the virtual project authentication information storage unit 5005 and the virtual project period information storage unit 5006.

When the association processing unit 53 associates content with a virtual room or a virtual project, the storing/reading unit 59 stores the associated information in the virtual project period information storage unit 5006.

When a device is associated with a virtual room, the storing/reading unit 59 stores information for associating content generated by the device with the virtual room in the content information storage unit 5007 in accordance with the association performed by the association processing unit 53.

In a case where the determination unit 62 has determined that a virtual project set for the virtual room is found when the device generates content, the storing/reading unit 59 stores information for associating the generated content with the virtual project in the content information storage unit 5007 in accordance with the association performed by the association processing unit 53.

As described above, whether the storing/reading unit 59 stores information related to content in association with a virtual room or a virtual project depends on the determination result obtained by the determination unit 62. A specific procedure will be described below.

The virtual room control unit 56 shares content associated with a virtual project among communication terminals 30 authenticated as belonging to the virtual project. Under the control of the virtual room control unit 56, the communication terminals 30 can view (use) the shared content. Further, the virtual room control unit 56 performs control to prohibit a communication terminal 30 that is not authenticated as belonging to the virtual project from viewing the content associated with the virtual project.

The project setting unit 61 can change, for each virtual project, the setting of an authentication method for permitting authentication of a communication terminal to participate in (or belong to) the virtual project.

When the project setting unit 61 changes the authentication method, the storing/reading unit 59 stores the changed authentication method in the virtual project authentication information storage unit 5005.

### Image Management Information Storage Unit 5001

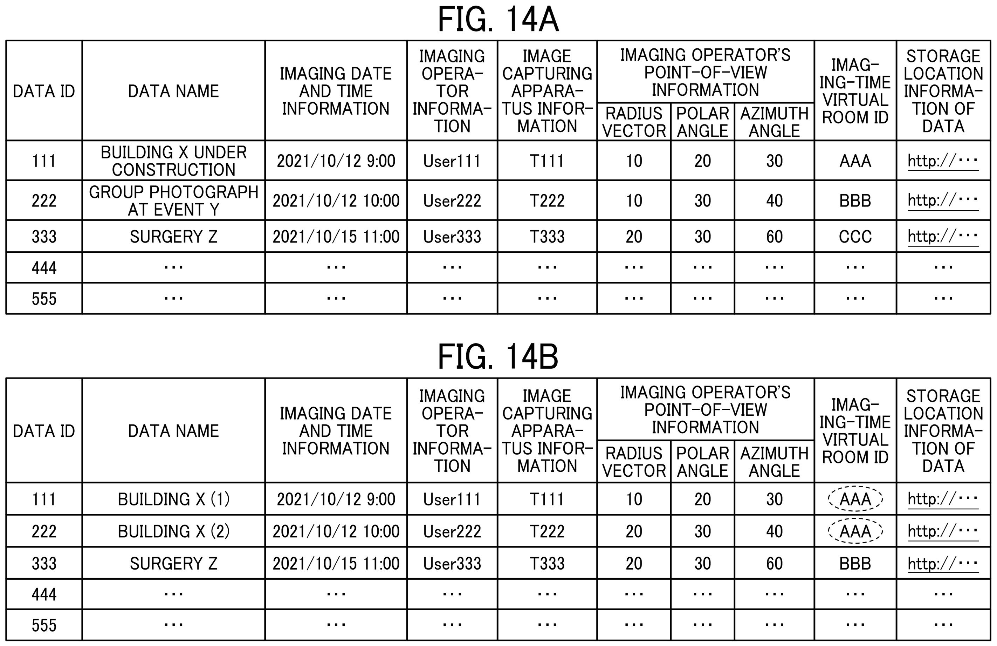

FIG. 14A is an illustration of image management information stored in the image management information storage unit 5001 according to the present embodiment. The image management information storage unit 5001 stores image management information as illustrated in FIG. 14A or 14B. The image management information is information for managing wide-view images captured in response to image capturing requests. In response to a user transmitting an image capturing request from the communication terminal 30, image management information for one record is generated. The items included in the image management information will be described.

The item "data ID" represents identification information that identifies a wide-view image. The information processing system 50 assigns a number to each data ID. ID is an abbreviation for identification and means an identifier or identification information. The ID is any one or a combination of two or more of a name, a symbol, a character string, and a numerical value that are used for uniquely identifying a specific object from among a plurality of objects.

The item "data name" represents the name of a wide-view image set by the user of the communication terminal 30. Each data name may be set by a user or automatically.

The item "imaging date and time information" represents information that specifies the imaging date and time of a wide-view image. Examples of the imaging date and time include the date and time when the user input an image capturing request to the communication terminal 30, and the date and time when the image capturing apparatus 10 captured a wide-view image. The imaging date and time information may be a timestamp of a wide-view image.

The item "imaging operator information" represents identification information (or a user name) of a user (imaging operator) who has input an image capturing request to the communication terminal 30. Since a user inputs an image capturing request to the communication terminal 30 after entering a virtual room, a user registered in the imaging operator information is identified by authentication for the information processing system 50 or the virtual room. The imaging operator information is transmitted to the information processing system 50 together with an image capturing request.

The item "image capturing apparatus information" represents identification information (image capturing apparatus ID) of the image capturing apparatus 10 that has captured a wide-view image. The information processing system 50 assigns a number to each image capturing apparatus ID and shares the image capturing apparatus ID with the image capturing apparatus 10. The image capturing apparatus ID may be information unique to the image capturing apparatus 10, such as a Media Access Control (MAC) address or a serial number. The image capturing apparatus ID is transmitted to the information processing system 50 together with the associated wide-view image.

The item "imaging operator's point-of-view information" represents point-of-view information including a radius vector, a polar angle, and an azimuth angle. The point-of-view information indicates the coordinates of the center of the wide-view image being displayed on the communication terminal 30. The point-of-view information is transmitted from the communication terminal 30 that makes an image capturing request. The point-of-view information may include information designating the width and height of the display range, in addition to the radius vector, the polar angle, and the azimuth angle. Alternatively, the point-of-view information may include the width and height of the display range, instead of the radius vector, the polar angle, and the azimuth angle.

The item "imaging-time virtual room ID" represents identification information of a virtual room associated with the image capturing apparatus 10.

The item "storage location information of data" represents a URL, a file path, or the like of a location where a wide-view image is stored.

FIG. 14B is also an illustration of image management information. In FIG. 14B, wide-view images having the same imaging-time virtual room ID are stored. The image management information may be classified in units of virtual rooms.

### Virtual Room Information Storage Unit 5002

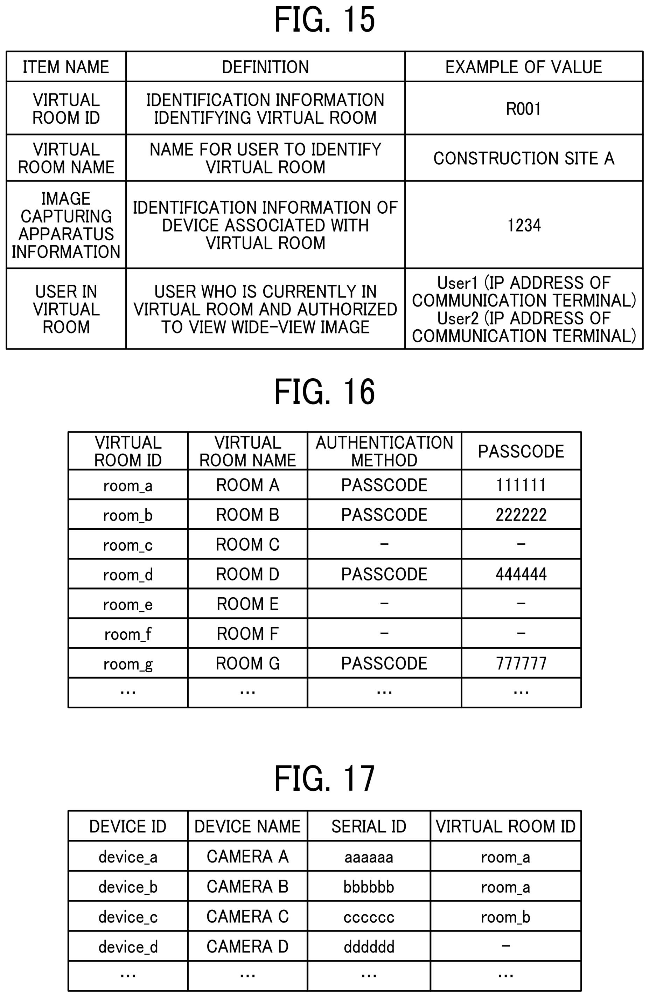

FIG. 15 is an illustration of virtual room information stored in the virtual room information storage unit 5002 according to the present embodiment. The virtual room information storage unit 5002 stores virtual room information as illustrated in FIG. 15. The virtual room information is information related to a virtual room. The virtual room information is held for each virtual room. The items included in the virtual room information will be described.

The item "virtual room ID" represents identification information that uniquely identifies a virtual room. In the present embodiment, each virtual room may be created by a user as appropriate.

The item "virtual room name" represents a name for a user to identify a virtual room. Each virtual room name may be set by the user as appropriate.

The item "image capturing apparatus information" represents identification information (image capturing apparatus ID) of the image capturing apparatus 10 associated with the virtual room.

The item "user in virtual room" represents the user ID of a user who has entered and is currently in the virtual room. The user is a user authorized to view a wide-view image. The method for entering a virtual room will be described below. The user ID is associated with the IP address of the communication terminal 30 operated by the user.

### Virtual Room Authentication Information Storage Unit 5003

FIG. 16 is an illustration of virtual room authentication information stored in the virtual room authentication information storage unit 5003 according to the present embodiment. The virtual room authentication information storage unit 5003 stores information related to authentication as illustrated in FIG. 16 for entering (or accessing) a virtual room. In the virtual room authentication information, a record is registered for each virtual room. The items included in the virtual room authentication information will be described. The items "virtual room ID" and "virtual room name" are as described above, and a description thereof will be omitted.

The item "authentication method" represents an authentication means or method for entering (or accessing) a virtual room. The authentication method includes, for example, but is not limited to, a passcode.

When the authentication method is a passcode, the passcode is a character string input by a user to enter the virtual room.

### Device Information Storage Unit 5004

FIG. 17 is an illustration of device information stored in the device information storage unit 5004 according to the present embodiment. The device information storage unit 5004 stores device information as illustrated in FIG. 17. The items included in the device information will be described.

The item "device ID" represents identification information that uniquely identifies a device. In the present embodiment, the device ID may be created by a user as desired or may be generated by the information processing system 50 automatically.

The item "device name" represents a name for a user to identify a device. The device name can be set by the user as desired.

The item "serial ID" represents identification information uniquely assigned to the device to identify the device. The serial ID may be identification information assigned by the manufacturer of the device to identify the device.

The item "virtual room ID" represents identification information that identifies a virtual room associated with the device. In the present embodiment, one virtual room is associated with one device. Any number of virtual rooms may be associated with one device. Content generated by the device is stored in association with the virtual room identified by the virtual room ID.

### Virtual Project Authentication Information Storage Unit 5005

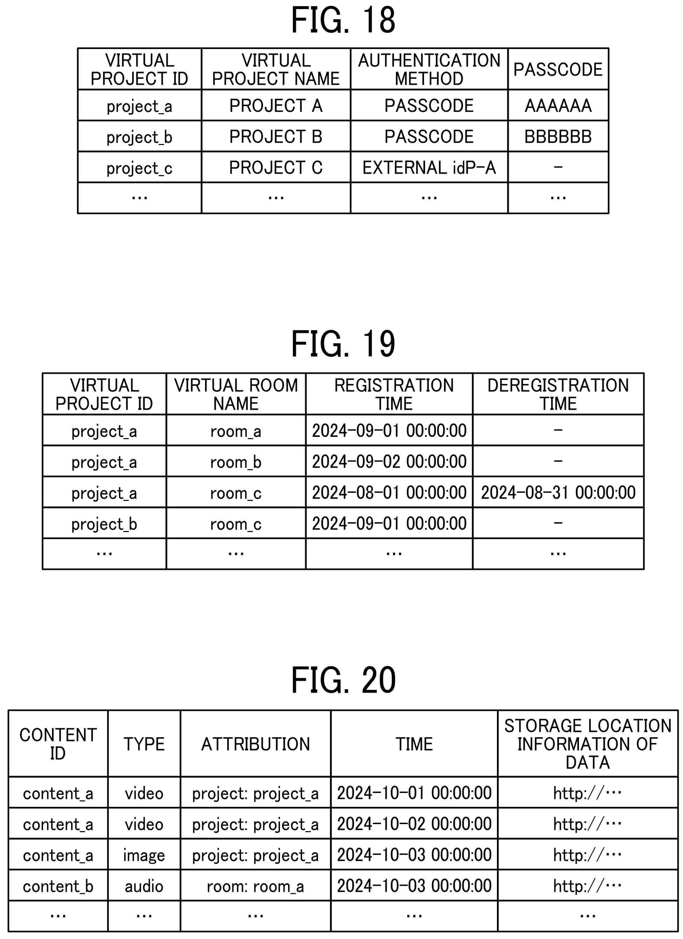

FIG. 18 is an illustration of virtual project authentication information stored in the virtual project authentication information storage unit 5005 according to the present embodiment. The virtual project authentication information storage unit 5005 stores information related to authentication as illustrated in FIG. 18 for entering (or accessing) a virtual project. The items included in the virtual project authentication information will be described.

The item "virtual project ID" represents identification information that identifies a virtual project. In the present embodiment, the virtual project ID is generated by the information processing system 50 automatically, by way of example, but not limitation. The virtual project ID may be generated by a user as desired.

The item "virtual project name" represents a name for identifying the virtual project. The virtual project name can be set by the user as desired.

The item "authentication method" represents an authentication means or method for logging in to (or accessing) the virtual project. The authentication method includes, for example, but is not limited to, a passcode or an external idP-A. The external idP-A is an example of an identity provider (idP) provided by an external service. In the present embodiment, an external service such as an idP may be provided as an authentication method.

The item "passcode" represents a character string input by a user to log in to (or access) the virtual project when the authentication method is a passcode.

### Virtual Project Period Information Storage Unit 5006

FIG. 19 is an illustration of virtual project period information stored in the virtual project period information storage unit 5006 according to the present embodiment. The virtual project period information storage unit 5006 stores information related to a period during which a virtual project is associated with a virtual room, as illustrated in FIG. 19.

The virtual project period information storage unit 5006 stores a period during which a project indicated by a virtual project ID and a virtual room indicated by a virtual room ID are associated with each other. The association period is managed by a registration time and a deregistration time. The items "virtual project ID" and "virtual room ID" are as described above, and a description thereof will be omitted.

The item "registration time" represents a time at which a project indicated by the virtual project ID starts to be associated with a virtual room indicated by the virtual room ID.

The item "deregistration time" represents a time at which the association between the project indicated by the virtual project ID and the virtual room indicated by the virtual room ID is released. The deregistration time may be left blank while the project indicated by the virtual project ID is associated with the virtual room.

### Content Information Storage Unit 5007

FIG. 20 is an illustration of content information stored in the content information storage unit 5007 according to the present embodiment. The content information storage unit 5007 stores content information as illustrated in FIG. 20. The items included in the content information will be described. The content information storage unit 5007 manages the attribution of content.

The item "content ID" represents identification information that identifies content. In the present embodiment, the content ID is generated by the information processing system 50 automatically.

The item "type" represents a type for identifying an application to reproduce the content.

The item "attribution" represents information indicating an entity that the content is classified into (belongs to) and that is associated with the content. In the present embodiment, a virtual project ID or a virtual room ID can be set as the classification location associated with the content.

The item "time" represents information indicating a time at which the content is generated. The time is information used to classify the content into, for example, a virtual project. Examples of such information include a date and time input by the user as the content generation date and time, and a date and time at which the device generated the content. The time may be replaced with a timestamp generated by the device.

The item "storage location information of data" represents a URL, a file path, or the like of a location where the content is stored.

### Entry of Communication Terminal into Virtual Room

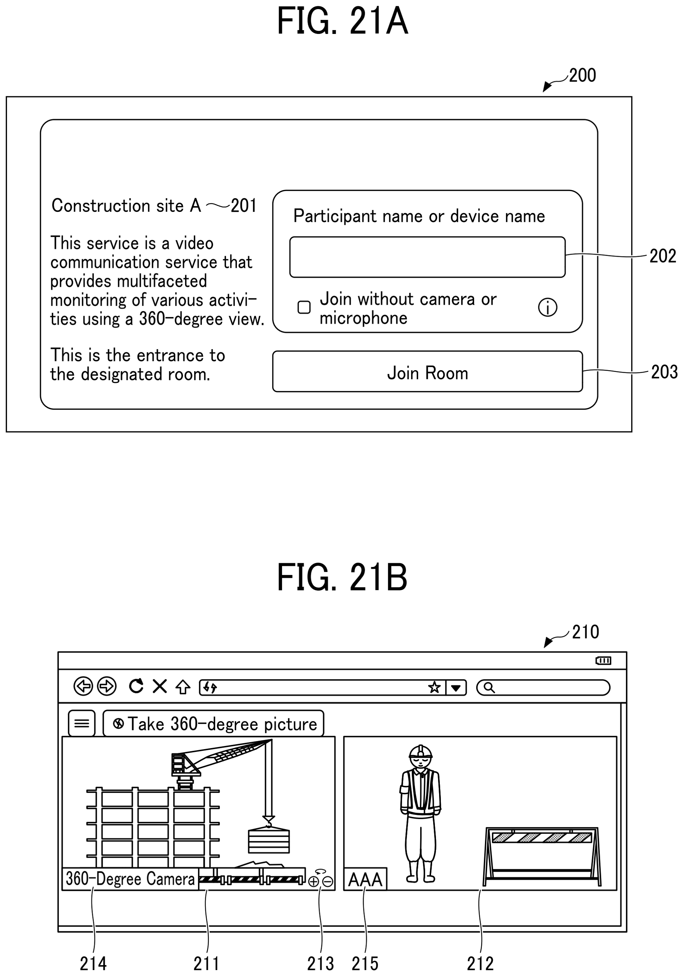

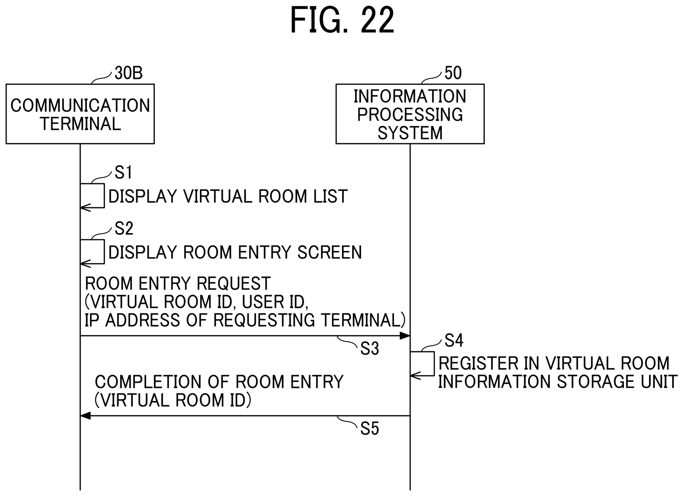

Next, a process in which the user B enters a virtual room will be described with reference to FIGs. 21A, 21B, and 22. In the illustrated example, the image capturing apparatus 10 has already been associated with the virtual room, and the communication terminal 30A has transmitted a wide-view image and an image having a normal angle of view to the information processing system 50. In the following description, no distinction is made between the entry of the user B into the virtual room and the entry of the communication terminal 30B, which is operated by the user B, into the virtual room.

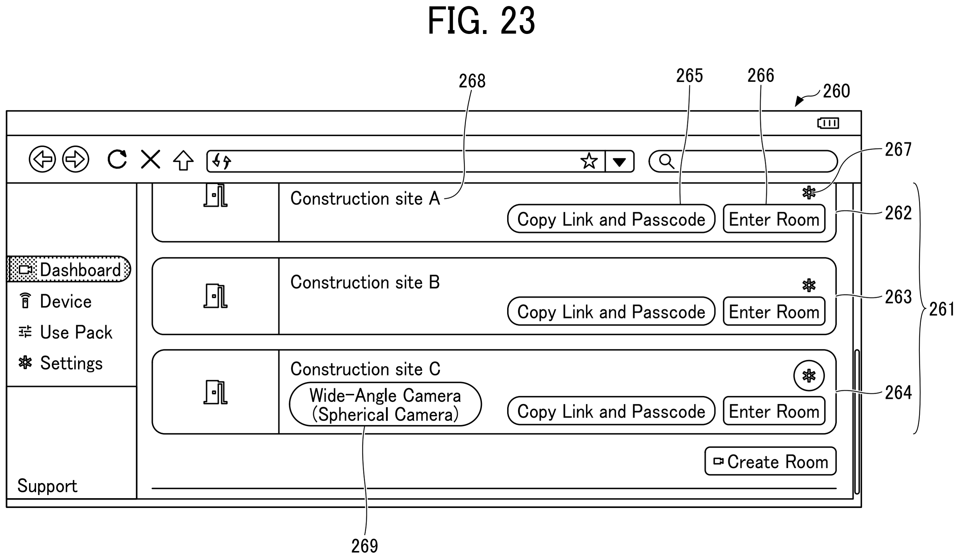

FIGs. 21A and 21B illustrate example screens displayed on the communication terminal 30B when the user B is to enter the virtual room. FIG. 21A illustrates an example of a room entry screen 200. Prior to the display of the room entry screen 200, the user B logs in to the information processing system 50. The information processing system 50 causes a list of virtual rooms to be displayed on the communication terminal 30B (see FIG. 23), and the user B selects a virtual room that the user B enters from the list. FIG. 21A illustrates the room entry screen 200 for the virtual room selected by the user B.

Alternatively, the creator of the virtual room may request the information processing system 50 to issue a URL corresponding to the virtual room, and the URL may be transmitted to the user B via email or any other means. In response to the user B clicking the URL displayed on the communication terminal 30B, the communication terminal 30B displays the room entry screen 200 illustrated in FIG. 21A.

The room entry screen 200 includes a virtual room name 201, a participant name input field 202, and a room entry button 203. The virtual room name 201 is the same as that stored in the virtual room information storage unit 5002. The participant name input field 202 may include a name such as a nickname of the user B. Upon the login of the user B, the user name of the user B is identified. The identified user name may be automatically displayed. The room entry button 203 is a button for the user B to send a request to enter the virtual room.

FIG. 21B illustrates an image viewing screen 210 displayed on the communication terminal 30B in response to the user B entering the virtual room. The image viewing screen 210 illustrated in FIG. 21B indicates that the image capturing apparatus 10 has already started distribution of a wide-view image and that the communication terminal 30A has already started distribution of an image having a normal angle of view. Accordingly, the image viewing screen 210 includes a first image area 211 and a second image area 212. The first image area 211 displays the wide-view image, and the second image area 212 displays the image having a normal angle of view. In one example, images are transmitted from three or more sites. The image viewing screen 210 is divided into a number of portions corresponding to the number of sites from which images are transmitted.

The first image area 211 displays a wide-view image mark 213. The wide-view image mark 213 is set by the screen generation unit 52 of the information processing system 50 based on a determination that the image to be displayed in the first image area 211 is a wide-view image. The determination may be made by the communication terminal 30B, and the communication terminal 30B may display the wide-view image mark 213. The wide-view image mark 213 allows the user B to know that the point of view can be changed. The first image area 211 also displays a device name 214. The device name 214 is transmitted from the image capturing apparatus 10 together with the wide-view image. The device name 214 may be set by, for example, the user A.

The second image area 212 displays a participant name 215. The participant name 215 is a user name. The participant name of a user who has already entered the virtual room is displayed in the participant name input field 202. In the illustrated example, since the user A has already entered the virtual room, "AAA", which is entered by the user A in the participant name input field 202, is displayed as the participant name 215.

FIG. 22 is a sequence diagram illustrating a process in which the user B (or the communication terminal 30B) enters the virtual room.

S1: First, the user B at the site B performs an operation for displaying a virtual room list screen. In response to the acceptance unit 32 accepting the operation for displaying the virtual room list screen, the display control unit 33 of the communication terminal 30B causes the display 306 to display a selection screen.

S2: In response to the user B selecting a selection button for one of the virtual rooms, the acceptance unit 32 of the communication terminal 30B accepts the selection of the virtual room. The display control unit 33 of the communication terminal 30B causes the display 306 to display the room entry screen 200.

S3: The user B completes the items and then presses the room entry button 203. In response to the acceptance unit 32 accepting the pressing of the room entry button 203, the communication unit 31 of the communication terminal 30B transmits a request to the information processing system 50 to enter the virtual room. The request for entering the virtual room includes a virtual room ID indicating the virtual room selected in step S2, the user ID of the user B, who is a login user, and the IP address of the communication terminal 30B from which the request is transmitted.

S4: The communication unit 51 of the information processing system 50 receives the request for entering the virtual room. The virtual room control unit 56 registers the IP address and the user ID of the login user in the virtual room information identified by the virtual room ID in the virtual room information storage unit 5002.

S5: The communication unit 51 of the information processing system 50 transmits, to the communication terminal 30B, a notification of the completion of the entry to the virtual room. Thus, the communication unit 31 of the communication terminal 30B receives the notification of the completion of the entry to the virtual room.

### Association of Image Capturing Apparatus with Room

Next, an association of the image capturing apparatus 10 with a virtual room will be described with reference to FIGs. 23 to 25. The image capturing apparatus 10 may be associated with a virtual room using any method by the user A at the site A or any other person such as a system administrator.

FIG. 23 illustrates an example of a virtual room association screen 260 for associating the image capturing apparatus 10 with a virtual room. The same screen configuration may be used for the VR goggles 89 and the smart glasses 88. The virtual room association screen 260 includes a virtual room list 261. The virtual room list 261 displays individual virtual room fields 262 to 264, based on virtual rooms. Each of the individual virtual room fields 262 to 264 includes a link issuance button 265, a room entry button 266, a settings button 267, and a virtual room name 268. The link issuance button 265 is a button for issuing a link (a URL for invitation) to the corresponding virtual room and a passcode. The room entry button 266 is a button for the user A to enter the virtual room. The settings button 267 is a button for associating the image capturing apparatus 10 with the virtual room. The virtual room name 268 is the same as that stored in the virtual room information storage unit 5002. The user A presses the settings button 267. In response to the pressing of the settings button 267, the communication terminal 30A displays a virtual room association screen 270.

If a device has already been associated with the virtual room, a name 269 of the device is displayed in the individual virtual room field (in FIG. 23, the individual virtual room field 264).

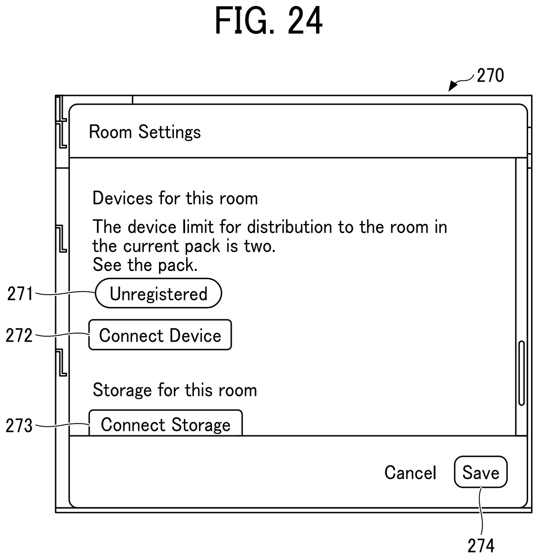

FIG. 24 illustrates an example of the virtual room association screen 270. The virtual room association screen 270 is displayed as a pop-up on the virtual room association screen 260. The screen transition from the virtual room association screen 260 to the virtual room association screen 270 is not made through the information processing system 50. In another example, the screen transition from the virtual room association screen 260 to the virtual room association screen 270 may be made through the information processing system 50.

The virtual room association screen 270 includes a name 271 of the image capturing apparatus 10 that is currently associated with the virtual room, a connection button 272, a storage button 273, and a "Save" button 274. In FIG. 24, the name 271 is set as "unregistered" because the image capturing apparatus 10 is not registered yet. The connection button 272 is a button for displaying a list of devices registered in the virtual room. The storage button 273 is a button for displaying a list of external storages 90 to store a wide-view image captured by the image capturing apparatus 10 associated with the virtual room. In response to the pressing of the connection button 272, the communication terminal 30A displays a virtual room association screen.

The communication terminal 30A transmits a virtual room ID to the information processing system 50 and acquires the name (or ID) of a device registered in the virtual room for which the virtual room is generated and the name (or ID) of a device associated with the virtual room.

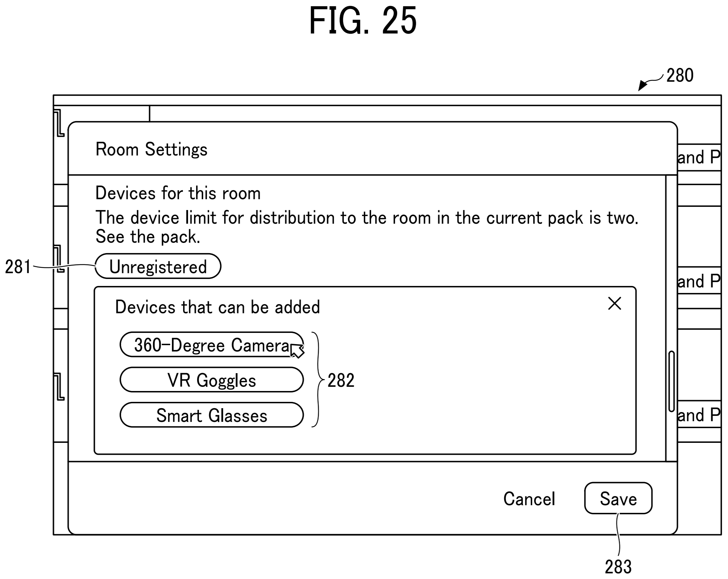

FIG. 25 illustrates an example of a virtual room association screen 280. The virtual room association screen 280 includes a name 281 of the image capturing apparatus 10 that is currently associated with the virtual room, a list of devices 282 that can be added, and a "Save" button 283. The user A selects a device to be associated with the virtual room from the list of devices 282 that can be added and then presses the "Save" button 283. As a result, the selected device is associated with the virtual room. That is, the corresponding image capturing apparatus ID is registered in the virtual room information storage unit 5002.

### Wide-View Image Transmission Start Process for Image Capturing Apparatus

In the way described above, a device such as the image capturing apparatus 10 is associated with the virtual room. The user A operates the device to start transmitting an image.

For the VR goggles 89 and the smart glasses 88, the user A operates the device main body to turn on or off the transmission of an image. This is because no application dedicated to the communication system 1 is currently operating on the VR goggles 89 or the smart glasses 88. If an application dedicated to the communication system 1 operates on the VR goggles 89 and the smart glasses 88, the user A can also remotely turn on or off the transmission of an image.

For the image capturing apparatus 10, when the application is enabled, the user A can turn on or off the transmission of a wide-view image from the menu of the application after entering the virtual room.

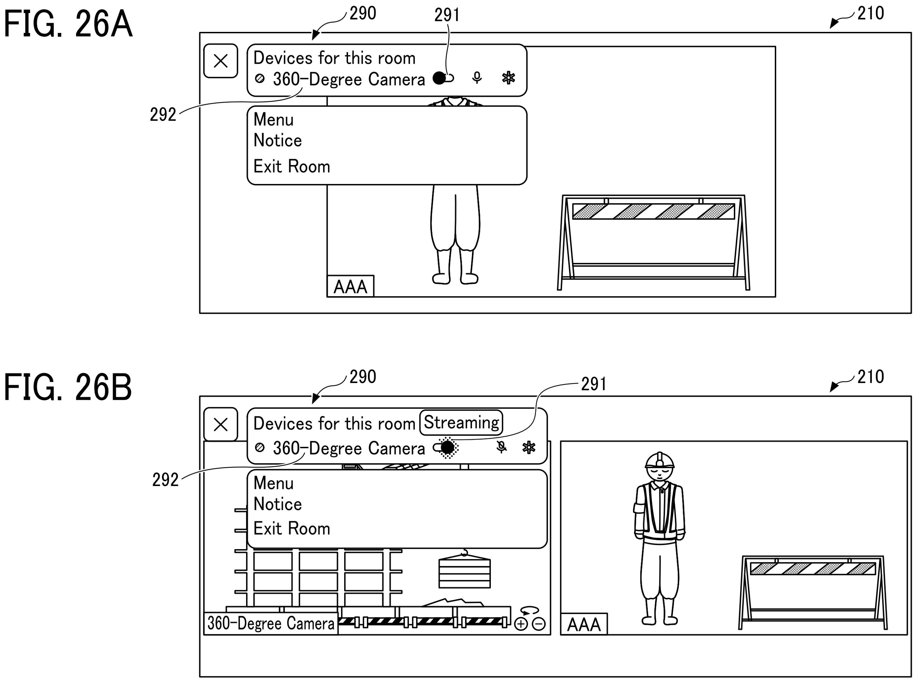

FIGs. 26A and 26B illustrate examples of a wide-view image transmission start/stop dialog 290 displayed on the communication terminal 30A. The wide-view image transmission start/stop dialog 290 is displayed as a pop-up on the image viewing screen 210. In the illustrated example, the user A has operated the communication terminal 30A and entered a virtual room associated with the image capturing apparatus 10. The wide-view image transmission start/stop dialog 290 displays a name 292 of the image capturing apparatus 10 associated with the virtual room. A toggle button 291 is displayed near the name 292. In one example, the user A operates the toggle button 291 to turn on or off the transmission of the wide-view image captured by the image capturing apparatus 10. Turning on or off the transmission of the wide-view image using a toggle button is merely an example, and any other method based on user operation input may be used. For example, a radio button or a predetermined icon may be selected, or a menu operation may be performed. Alternatively, the transmission of the wide-view image may be started automatically, without using a user operation, after the image capturing apparatus 10 enters the room. In another example, a predetermined condition such as the date and time, the number of users who have entered the room, or the participation of a specific user is determined in advance, and the transmission of the wide-view image is started based on a determination that the predetermined condition is satisfied.

The communication terminal 30A transmits the state of the toggle button 291 to the information processing system 50. The information processing system 50 transmits a transmission start request or a transmission stop request corresponding to the state of the toggle button 291 to the image capturing apparatus 10.

FIG. 26A illustrates an off state of the toggle button 291. In FIG. 26A, thus, the wide-view image is not displayed. By contrast, the image having a normal angle of view captured by the image capturing apparatus 9 of the communication terminal 30A is displayed in the image viewing screen 210 in FIG. 26A since the image having a normal angle of view has already been shared at the time of entry of the communication terminal 30A into the virtual room.

FIG. 26B illustrates an on state of the toggle button 291. In response to turning on of the toggle button 291, the information processing system 50 transmits a transmission start request to the image capturing apparatus 10. Accordingly, the image capturing apparatus 10 starts transmitting the wide-view image. Since two images are shared in one virtual room, the image viewing screen 210 is divided into two areas.

### Procedure for Registering Image Capturing Apparatus in Virtual Room

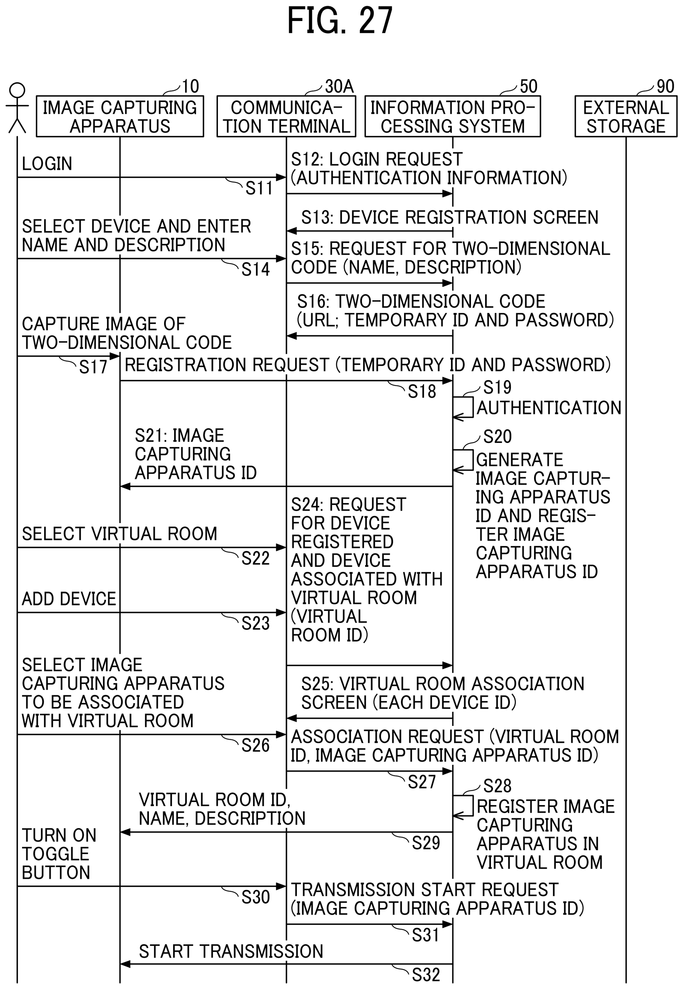

Next, a procedure for registering the image capturing apparatus 10 in the virtual room illustrated in the screen transitions will be described with reference to FIG. 27. FIG. 27 is a sequence diagram illustrating an example of a procedure in which the user A registers the image capturing apparatus 10 in the virtual room.

S11: First, the user A connects the communication terminal 30A to the information processing system 50 and enters authentication information (such as a user ID and a password) to make a login request to the virtual room to which the user A belongs. The acceptance unit 32 of the communication terminal 30A accepts the operation.

S12: The communication unit 31 of the communication terminal 30A designates the authentication information and transmits the login request to the information processing system 50. In the information processing system 50, the communication unit 51 receives the login request, and the authentication unit 55 performs authentication. It is assumed that the authentication has been successful.

S13: In the information processing system 50, the screen generation unit 52 generates a device registration screen in response to a user operation, and the communication unit 51 transmits screen information of the device registration screen to the communication terminal 30A.

S14: In the communication terminal 30A, the communication unit 31 receives the screen information of the device registration screen, and the display control unit 33 displays the device registration screen. The user A selects the type of the device (in the illustrated example, the image capturing apparatus 10). Then, the user A enters the name and description of the image capturing apparatus 10. The acceptance unit 32 receives the entered information.

S15: The communication unit 31 of the communication terminal 30A designates the name and description entered by the user A and transmits a request for a two-dimensional code to the information processing system 50.

S16: The communication unit 51 of the information processing system 50 receives the request for a two-dimensional code. The virtual room control unit 56 generates a URL (connection destination for registration) in association with the name and the description, and generates a two-dimensional code including the URL, a temporary ID, and a password. The communication unit 51 of the information processing system 50 transmits the two-dimensional code to the communication terminal 30A. In the communication terminal 30A, the communication unit 31 receives the two-dimensional code, and the display control unit 33 displays the two-dimensional code.

S17: The user A operates the image capturing apparatus 10 to be associated with the virtual room to capture an image of the two-dimensional code. The acceptance unit 12 of the image capturing apparatus 10 accepts the operation.

S18: In the image capturing apparatus 10, the imaging processing unit 13 performs an operation for capturing an image including the two-dimensional code to generate image data, and the analysis unit 14 analyzes the image data to extract the URL, the temporary ID, and the password. Accordingly, the registration request unit 15 connects to the URL via the connection unit 16, designates the temporary ID and the password, and transmits a request for registering the image capturing apparatus 10 to the information processing system 50.

S19: In the information processing system 50, the communication unit 51 receives the temporary ID and the password, and the authentication unit 55 determines whether the received temporary ID and password match the temporary ID and password associated with the connected URL. It is assumed that a match has been found.

S20: Since a request for registering the image capturing apparatus 10 has been made, the virtual room control unit 56 of the information processing system 50 generates an image capturing apparatus ID and registers the image capturing apparatus ID in the virtual room to which the user A has logged in. The image capturing apparatus ID is associated with a name and a description.

S21: The communication unit 51 of the information processing system 50 transmits the image capturing apparatus ID to the image capturing apparatus 10. The connection unit 16 of the image capturing apparatus 10 receives the image capturing apparatus ID and stores the image capturing apparatus ID in the storage unit 1000.

S22: The communication terminal 30A is notified of the completion of the registration, and, accordingly, the user A starts associating the image capturing apparatus 10 with the virtual room. The user A selects, on the virtual room association screen 260 displayed on the communication terminal 30A, a virtual room with which the image capturing apparatus 10 is to be associated. The acceptance unit 32 of the communication terminal 30A accepts the selection of the virtual room.

77 The acceptance unit 32 of the communication terminal 30A accepts the pressing of the "add device" button.

S24: The communication unit 31 of the communication terminal 30A transmits to the information processing system 50 a request for devices registered in the virtual room and devices associated with the virtual room ID selected in step S22.

S25: In the information processing system 50, the communication unit 51 receives the request for the devices registered in the virtual room and the devices associated with the virtual room ID, and the screen generation unit 52 generates the virtual room association screen 280 including the device IDs of the devices registered in the virtual room and the devices associated with the virtual room ID. The communication unit 51 of the information processing system 50 transmits screen information of the virtual room association screen 280 to the communication terminal 30A.

S26: In the communication terminal 30A, the communication unit 31 receives the screen information of the virtual room association screen 280, and the display control unit 33 displays the virtual room association screen 280. The user A selects the image capturing apparatus 10 to be associated with the virtual room. The acceptance unit 32 of the communication terminal 30A accepts the selection of the image capturing apparatus 10, and the image capturing apparatus ID is identified.

S27: The communication unit 31 of the communication terminal 30A designates the virtual room ID selected in step S22 and the image capturing apparatus ID selected in step S26, and transmits an association request to the information processing system 50.

S28: In the information processing system 50, the communication unit 51 receives the association request, and the virtual room control unit 56 registers the image capturing apparatus 10 in the virtual room. That is, the virtual room control unit 56 registers the image capturing apparatus ID in the virtual room information storage unit 5002.

S29: Since the image capturing apparatus ID is associated with the virtual room, the communication unit 51 of the information processing system 50 transmits the virtual room ID, the name, and the description to the image capturing apparatus 10. The information processing system 50 may transmit the virtual room ID, the name, and the description to the image capturing apparatus 10 by using a push notification or by using polling, which is performed by the image capturing apparatus 10. The connection unit 16 of the image capturing apparatus 10 receives the virtual room ID, the name, and the description and stores the virtual room ID, the name, and the description in the storage unit 1000. Accordingly, the image capturing apparatus 10 can attach, for example, the image capturing apparatus ID, the virtual room ID, the name, and the description to a wide-view image to be transmitted.

S30: The communication terminal 30A is notified of the completion of the association, and, accordingly, the user A turns on the toggle button 291 for the image capturing apparatus 10 associated with the virtual room on the image viewing screen 210. The acceptance unit 32 of the communication terminal 30A accepts the turn-on operation.

S31: The communication unit 31 of the communication terminal 30A designates the image capturing apparatus ID and transmits, to the information processing system 50, a request for starting transmission of the wide-view image. The user A may directly operate a button of the image capturing apparatus 10 to start transmitting the wide-view image. In response to an operation performed by the user A, the communication unit 31 of the communication terminal 30A may transmit a transmission stop request to the information processing system 50.

S32: The communication unit 51 of the information processing system 50 receives the transmission start request and requests the image capturing apparatus 10 identified by the image capturing apparatus ID to start transmission. The information processing system 50 may use a push notification or use polling, which is performed by the image capturing apparatus 10. In the image capturing apparatus 10, the connection unit 16 receives the transmission start request, and the imaging processing unit 13 starts capturing a wide-view image. The image transmission control unit 18 repeatedly transmits the wide-view image with a determined frame rate (expressed in FPS) or a frame rate (expressed in FPS) corresponding to a bandwidth via the connection unit 16. As a result, the communication terminal 30 that has entered the virtual room can display the state of the site A on the image viewing screen 210 in real time.

### Distribution of Wide-View Image and Others

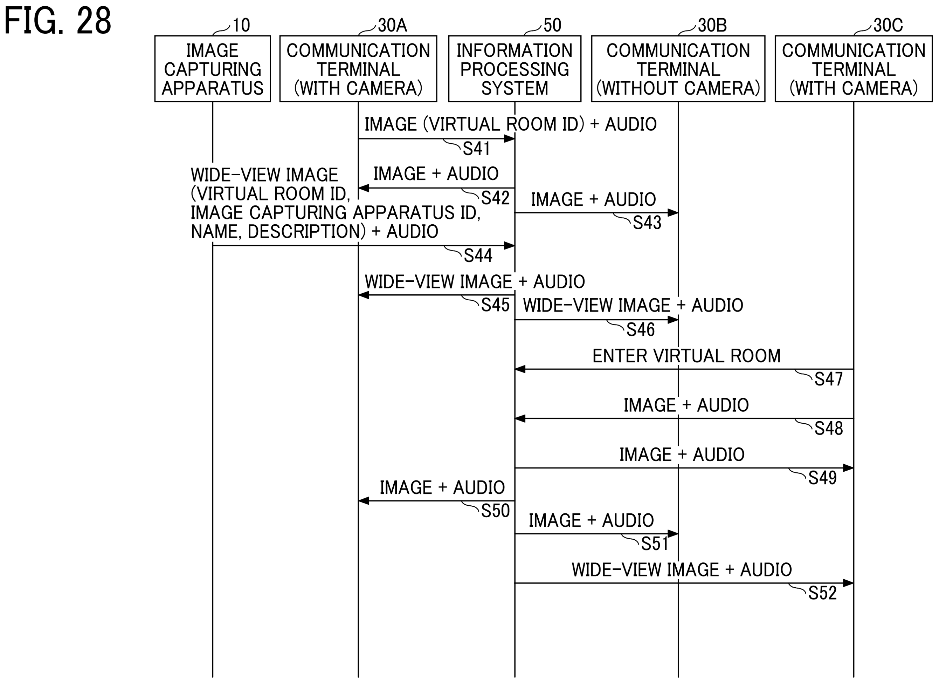

A process for sharing a wide-view image or an image having a normal angle of view will be described with reference to FIG. 28. FIG. 28 is a sequence diagram illustrating an example of a process for sharing a wide-view image. In FIG. 28, the communication terminals 30A and 30B have entered the virtual room. The communication terminal 30A includes the image capturing apparatus 9 having a normal angle of view, and an image captured by the image capturing apparatus 9 is shared with the communication terminal 30B. An image or the like captured by the smart glasses 88 associated with the virtual room, instead of the image capturing apparatus 9 of the communication terminal 30A, may be shared.

S41: In the communication terminal 30A, the imaging unit 34 repeatedly captures an image to obtain captured images, and the communication unit 31 designates the virtual room ID of the virtual room that the communication terminal 30A is in and repeatedly transmits the images and audio to the information processing system 50.

S42 and S43: In the information processing system 50, in response to the communication unit 51 receiving the images and the audio, the image distribution unit 54 acquires the IP addresses of the communication terminals 30A and 30B, which are in the virtual room, from the virtual room information storage unit 5002, and transmits the images and the audio via the communication unit 51. In FIG. 28, an image having a normal angle of view is received by the communication unit 31 of the communication terminal 30A from the information processing system 50 and is displayed. In another example, an image having a normal angle of view is not received from the information processing system 50, but an image having a normal angle of view is captured by the imaging unit 34 and is displayed.

S44: In the image capturing apparatus 10, in response to a transmission start request made by turning on the toggle button 291, the imaging processing unit 13 repeatedly captures a wide-view image to obtain captured wide-view images, and the image transmission control unit 18 designates the virtual room ID, the image capturing apparatus ID, the name, and the description and repeatedly transmits the wide-view images and audio to the information processing system 50 via the connection unit 16.

S45 and S46: In the information processing system 50, in response to the communication unit 51 receiving the wide-view images and the audio, the image distribution unit 54 acquires the IP addresses of the communication terminals 30A and 30B, which are in the virtual room, from the virtual room information storage unit 5002, and transmits the wide-view images and the audio via the communication unit 51.

S47: The communication terminal 30C including the image capturing apparatus 9 newly enters the virtual room.

S48: The communication unit 31 of the communication terminal 30C transmits an image having a normal angle of view and audio to the information processing system 50.

S49 to S51: In the information processing system 50, the communication unit 51 receives the image having a normal angle of view and the audio from the communication terminal 30C, and the image distribution unit 54 acquires the IP addresses of the communication terminals 30A to 30C, which are in the virtual room, from the virtual room information storage unit 5002, and transmits the image having a normal angle of view and the audio.

S52: The communication unit 51 of the information processing system 50 also transmits the wide-view images and the audio to the communication terminal 30C, which is in the same virtual room.

As described above, the users A and B, who are in the same virtual room, can share the wide-view images captured by the image capturing apparatus 10 associated with the virtual room. The order of transmission of the images illustrated in FIG. 28 is an example. In another example, the wide-view images may be shared first, or the images having a normal angle of view may be shared first.

A supplementary description will be given of the smart glasses 88 and the VR goggles 89. The smart glasses 88 have a camera having a normal angle of view and a display function. The camera of the smart glasses 88 captures an image having a normal angle of view, and the captured image having a normal angle of view is distributed in a manner similar to that for the image capturing apparatuses 8 and 9. The display function of the smart glasses 88 is implemented by a flat screen, like that of an ordinary display. Thus, part of a wide-view image is displayed from a point of view designated by the user. The VR goggles 89 have a display function. In one example, the VR goggles 89 may also include a camera having a normal angle of view. The display function of the VR goggles 89 projects a wide-view image with a point of view determined by the orientation of the head of the user wearing the VR goggles 89. Thus, part of the wide-view image is displayed from a point of view corresponding to the orientation of the head of the user. While viewing a wide-view image with the smart glasses 88 or the VR goggles 89, the user can transmit, to the information processing system 50, an image capturing request that designates point-of-view information of the wide-view image being viewed. Concept of Virtual Project

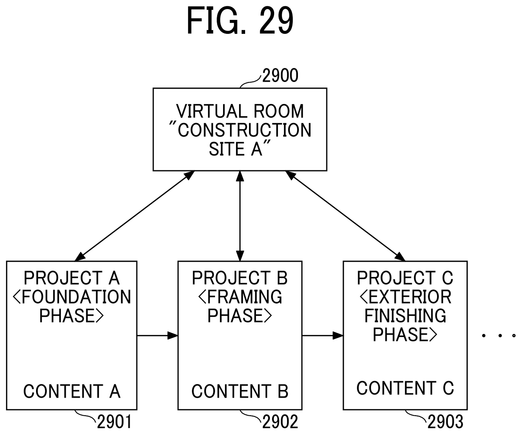

FIG. 29 is a diagram illustrating the correspondence relationship between a virtual room and virtual projects according to the present embodiment. In the example illustrated in FIG. 29, a virtual room 2900 is set as "construction site A". In the example illustrated in FIG. 29, the virtual room 2900 is associated with virtual projects 2901, 2902, and 2903.

The virtual project 2901 is a project related to a "foundation phase" on the "construction site A". The virtual project 2902 is a project related to a "framing phase" on the "construction site A". The virtual project 2903 is a project related to an "exterior finishing phase" on the "construction site A".

The virtual project 2901, the virtual project 2902, and the virtual project 2903 are projects using the virtual room 2900. The information processing system 50 according to the present embodiment can associate a different item of content with each virtual project.

In the present embodiment, by way of example, no more than one project is simultaneously registered in the virtual room 2900. Thus, after the period of the virtual project 2901 ends, the period of the virtual project 2902 starts. After the period of the virtual project 2902 ends, the period of the virtual project 2903 starts. The information processing system 50 manages the period of each virtual project by using the virtual project period information storage unit 5006.

### Example Screens Related to Virtual Projects

Next, screens related to the virtual projects will be described.

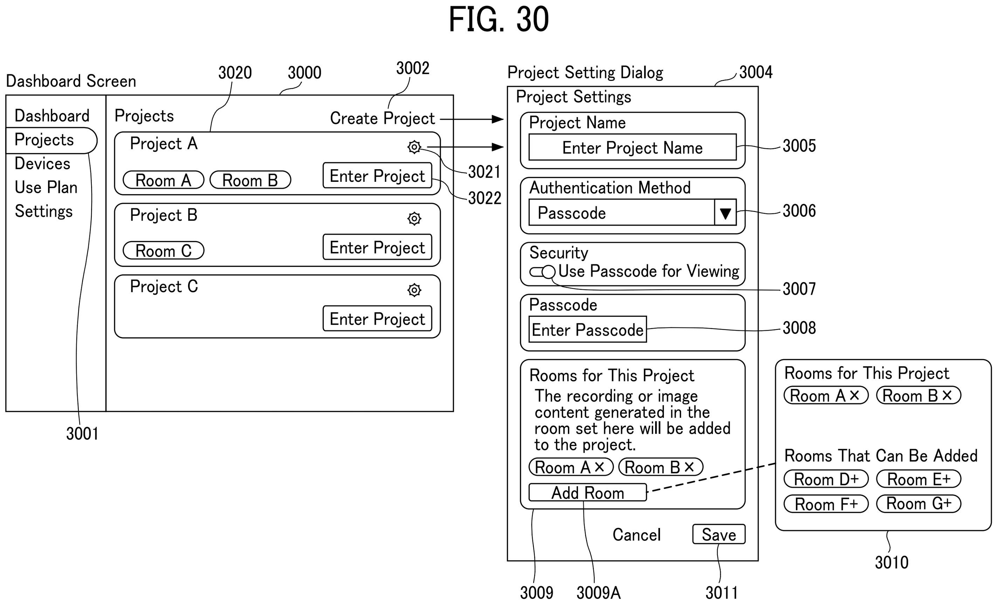

FIG. 30 is a diagram illustrating an example of a dashboard screen 3000 displayed on the communication terminal 30 of an administrator of a virtual room by the information processing system 50 according to the present embodiment. On the dashboard screen 3000 illustrated in FIG. 30, a project item 3001 is selected. Accordingly, the dashboard screen 3000 displays a project list. The dashboard screen 3000 allows virtual project management such as creation of a virtual project and setting changes. The dashboard screen 3000 is a screen referred to by an authorized user (administrator) who is a party to a contract for the system of the virtual room.

When pressing of a "Create Project" button 3002 on the dashboard screen 3000 is accepted, the project setting unit 61 of the information processing system 50 displays a project setting dialog 3004 to set a new project.

The project setting dialog 3004 includes a project name input field 3005, a pull-down menu 3006 for selecting an authentication method, a toggle button 3007 for security selection, a passcode input field 3008, and a room setting field 3009.

The project setting dialog 3004 is a dialog for creating a new virtual project or editing an existing virtual project. In one example, the project setting dialog 3004 is a dialog for inputting information to be registered in the virtual project authentication information storage unit 5005 and the virtual project period information storage unit 5006.

The project name input field 3005 is a field for receiving an input of a virtual project name from the administrator. The pull-down menu 3006 is a pull-down menu for receiving a selection of, for example, a passcode or the external idP-A to select an authentication method.

That is, since virtual projects may be used by a user group different from the party to the contract for the system, various authentication methods including the external idP-A can be set in order for such a user group to participate in the virtual projects. In the example illustrated in FIG. 30, authentication using a passcode is set. In another example, an ID provider (idP) for external software as a service (SaaS) may be used.

The toggle button 3007 for security selection is a button for receiving a selection from the administrator as to whether input of a passcode is to be performed.

The passcode input field 3008 is a field for setting a passcode that a general user enters to log in to a virtual project.

The room setting field 3009 is a field for setting a virtual room to be associated with the virtual project. For example, the project setting unit 61 of the information processing system 50 accepts pressing of an "Add Room" button 3009A by the administrator, and thereafter accepts a selection of one or more of virtual rooms not registered in the other virtual projects from a list 3010 of virtual rooms under contract. The one or more virtual rooms for which the selection is received are associated with the virtual project.

In response to the project setting unit 61 accepting pressing of a "Save" button 3011, the storing/reading unit 59 registers the information set in the project setting dialog 3004 in the virtual project authentication information storage unit 5005 and the virtual project period information storage unit 5006.

For example, on the dashboard screen 3000 illustrated in FIG. 30, a project field 3020 indicates that virtual room A and virtual room B are associated with project A. When pressing of a settings button 3021 in the project field 3020 is accepted, the project setting unit 61 displays the project setting dialog 3004 to edit the project A. The project setting dialog 3004 is as described above, and a description thereof will be omitted.

In response to the administrator pressing an "Enter Project" button 3022 in the project field 3020, a project entrance screen is displayed.

An individual URL is set for the created virtual project. The administrator distributes the URL to the users of the virtual project. As a result, the users of the virtual project can access the virtual project.

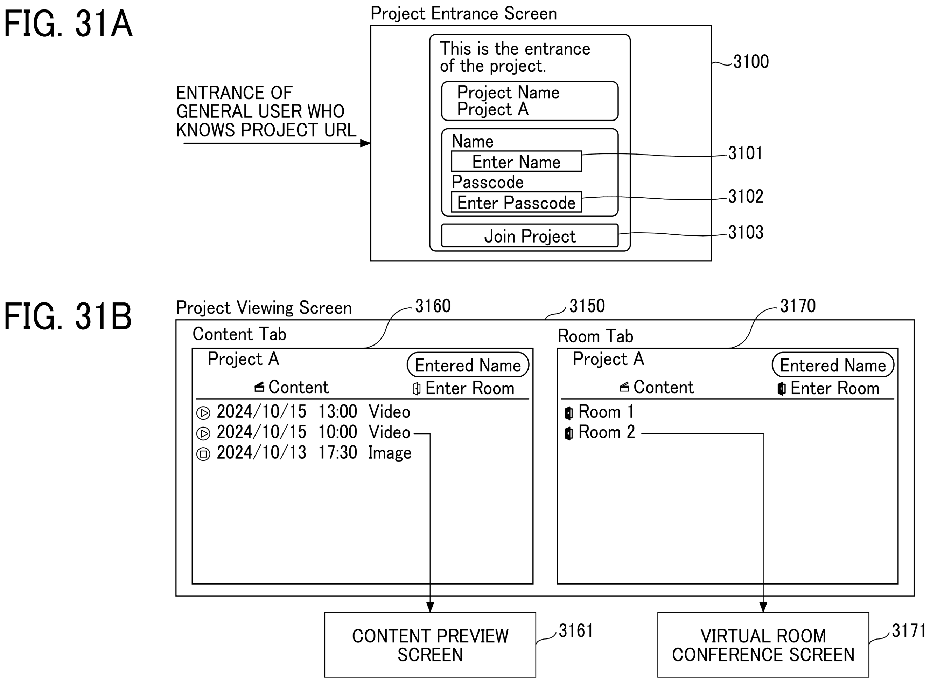

FIGs. 31A and 31B are diagrams illustrating examples of screens related to a virtual project, which are displayed on the communication terminal 30 of a user belonging to the virtual project by the information processing system 50 according to the present embodiment. The screens related to the virtual project allow a user participating in the virtual project to view content data such as video or an image associated with the virtual project, enter a virtual room registered in the virtual project and join streaming, and perform other activities.

FIG. 31A illustrates a project entrance screen 3100. The project entrance screen 3100 is a screen displayed when a URL distributed to the user is accessed or when pressing of the "Enter Project" button 3022 on the dashboard screen 3000 illustrated in FIG. 30 is accepted.

The project entrance screen 3100 illustrated in FIG. 31A is used to perform authentication to participate in the virtual project. A passcode is set as an authentication method for the project illustrated in FIG. 31A.

The acceptance unit 32 of the communication terminal 30 accepts input of a user name to a user name input field 3101 and input of a passcode to a passcode input field 3102 on the project entrance screen 3100. After accepting the input to the user name input field 3101 and the passcode input field 3102 on the project entrance screen 3100, the acceptance unit 32 accepts pressing of a "Join Project" button 3103. The communication unit 31 of the communication terminal 30 transmits the input information to the information processing system 50.

After the communication terminal 30 recognizes that the "Join Project" button 3103 has been pressed, the authentication unit 55 of the information processing system 50 performs authentication based on the received information. When the authentication is successful, the screen generation unit 52 generates a project viewing screen illustrated in FIG. 31B. The communication unit 51 transmits the generated project viewing screen to the communication terminal 30. The display control unit 33 of the communication terminal 30 performs control to display the received project viewing screen on a display unit (e.g., a liquid crystal panel) of the communication terminal 30. As a result, the user can participate in the virtual project.

In a case where the IdP for the external SaaS is set instead of the passcode, the information processing system 50 causes the communication terminal 30 to display an authentication screen for the external SaaS. In response to receipt of a notification indicating successful authentication from the external SaaS, the communication unit 51 of the information processing system 50 transmits the project viewing screen illustrated in FIG. 31B to the communication terminal 30. As a result, the user can participate in the virtual project.

In a case where the authentication method is set to none, in response to access from a URL distributed by the user, the information processing system 50 performs control such that the project entrance screen 3100 is skipped and the project viewing screen illustrated in FIG. 31B is displayed on the communication terminal 30.

A project viewing screen 3150 illustrated in FIG. 31B includes a content tab 3160 and a room tab 3170.

The content tab 3160 displays a content data list associated with the virtual project. In the content data list, a different icon is displayed for each content type. The information processing system 50 associates each content type with an application for reproducing the content.

In response to receipt of a notification from the communication terminal 30 that any content is selected from the list, the virtual room control unit 56 of the information processing system 50 transmits a content preview screen 3161 on which the selected content is displayed to the communication terminal 30 using an application corresponding to the content type. The display control unit 33 of the communication terminal 30 performs control to display the received content preview screen 3161 on a display unit (e.g., a liquid crystal panel) of the communication terminal 30. Thus, the display control unit 33 can implement display of the content data associated with the virtual project.

The room tab 3170 displays a virtual room list for which the virtual project is set. In response to receipt of selection of a virtual room from the user, the information processing system 50 performs a process for the user to enter the virtual room. In the example illustrated in FIG. 31B, since the user has passed authentication of the virtual project, authentication of the virtual room is skipped.

Thus, the virtual room control unit 56 of the information processing system 50 controls the communication terminal 30 of the user who has entered the virtual room to display a virtual room conference screen 3171 on which the selected virtual room is displayed.

### Process Flow Related to Virtual Project

Next, a process flow related to a virtual project, which is performed in the communication system 1 according to the present embodiment, will be described.

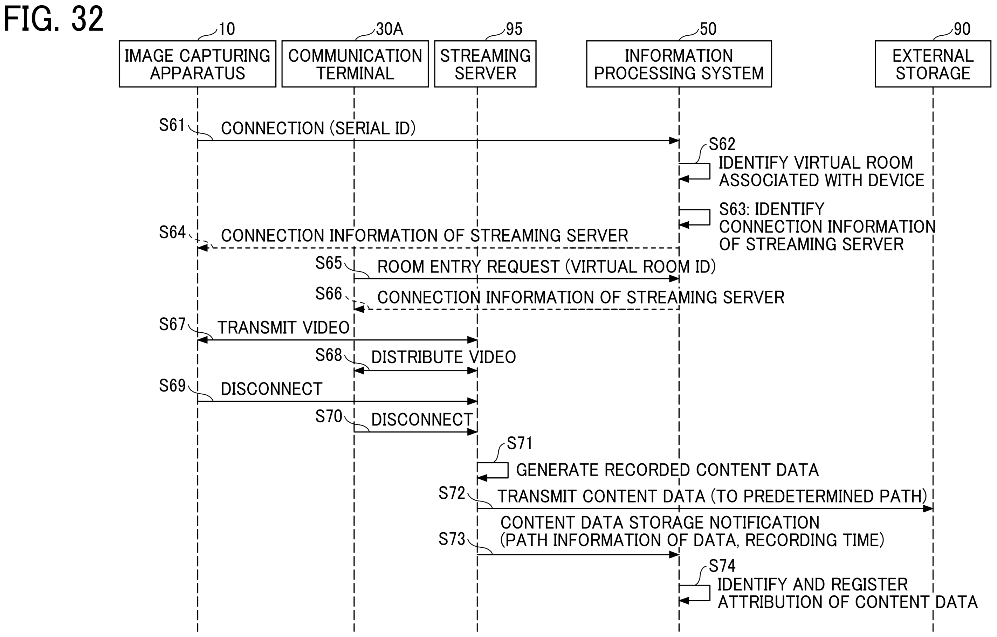

FIG. 32 is a sequence diagram illustrating a processing procedure performed in the communication system 1 according to the present embodiment until content distributed online in a virtual room is stored.

S61: The image capturing apparatus 10 transmits the serial ID of the device to the information processing system 50 in order to connect to a virtual room provided by the information processing system 50.

S62: The storing/reading unit 59 of the information processing system 50 searches the content information storage unit 5007 using the received serial ID and identifies a virtual room associated with the image capturing apparatus 10.

S63: The image distribution unit 54 of the information processing system 50 identifies connection information of the streaming server 95 for distribution to the identified virtual room. The connection information of the streaming server 95 may be identified using any method. For example, the image distribution unit 54 of the information processing system 50 may receive the connection information from the streaming server 95 to distribute content.

S64: The communication control unit 57 of the information processing system 50 transmits, using the communication unit 51, the identified connection information to the image capturing apparatus 10 as connection information of the streaming server 95 to enter the virtual room.

S65: The communication terminal 30A transmits a request to the information processing system 50 to enter the virtual room. The communication terminal 30A may perform login using a virtual room ID or may perform login using a virtual project ID. When a login is performed with a virtual project ID, the communication terminal 30A enters the virtual room with a virtual room ID associated with the virtual project ID. In the illustrated example, the image capturing apparatus 10 distributes video in the virtual room.

S66: The communication control unit 57 of the information processing system 50 uses the communication unit 51 to transmit the connection information of the streaming server 95 to the communication terminal 30A.

S67: The image capturing apparatus 10 transmits the captured video to the transmission destination indicated by the connection information.

S68: The streaming server 95 distributes the video received from the image capturing apparatus 10 to the communication terminal 30A, which has entered the virtual room.

S69: At the end of the streaming distribution, the image capturing apparatus 10 disconnects from the streaming server 95.

S70: At the end of the streaming distribution, the communication terminal 30A disconnects from the streaming server 95.

S71: The streaming server 95 generates recorded content data indicating the streamed and distributed content.

S72: The streaming server 95 transmits the created content data to a predetermined path in the external storage 90. The predetermined path is determined based on the virtual room. Thus, the content data is stored in the predetermined path.

S73: The streaming server 95 transmits a content data storage notification to the information processing system 50. The content data storage notification includes path information indicating a path to the storage location of the content data, and a time (recording time) at which the content is distributed. The path information includes information (e.g., an extension) for identifying the content type.

S74: The storing/reading unit 59 of the information processing system 50 identifies the attribution of the content data, based on the received information, and registers the content ID, the content type, the content attribution, the recording time, and the path information in the content information storage unit 5007 in association with one another. The content ID is generated by the information processing system 50 automatically. In one example, the attribution of the content data indicates a virtual room or a virtual project. A method for identifying the content attribution will be described below.

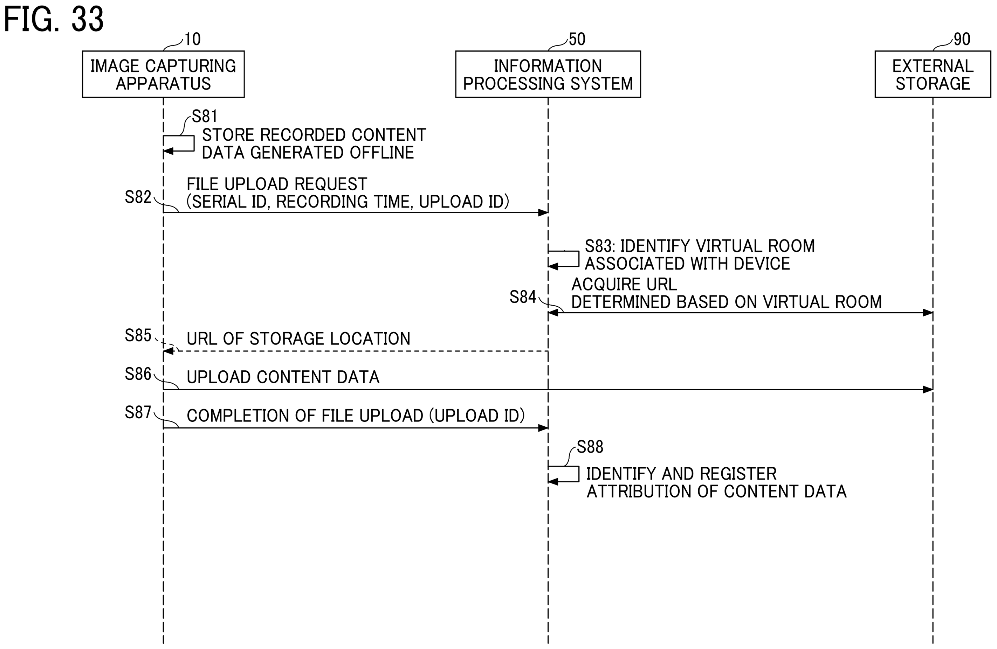

FIG. 33 is a sequence diagram illustrating a processing procedure performed in the communication system 1 according to the present embodiment until content recorded offline in a virtual room is stored. In FIG. 33, by way of example, content data captured offline by the image capturing apparatus 10 is uploaded to be shared among a plurality of users.

S81: The image capturing apparatus 10 generates video offline and stores the generated video as recorded content data. The image capturing apparatus 10 holds, as a recording time, a time at which the video is generated.

S82: The image capturing apparatus 10 transmits an upload request for uploading content data to the information processing system 50. The upload request includes the serial ID of the image capturing apparatus 10, the recording time, and an upload ID. The upload ID is identification information assigned by the image capturing apparatus 10 in response to an upload request.

S83: The storing/reading unit 59 of the information processing system 50 searches the content information storage unit 5007 using the received serial ID and identifies a virtual room associated with the image capturing apparatus 10.

S84: The communication control unit 57 of the information processing system 50 acquires, from the external storage 90, a URL determined based on the identified virtual room.

S85: The communication control unit 57 of the information processing system 50 transmits the acquired URL to the image capturing apparatus 10 in association with the upload ID.

S86: The image capturing apparatus 10 uploads the content data identified by the upload ID to the received URL.

S87: The image capturing apparatus 10 transmits the upload ID and a notification indicating the completion of the upload to the information processing system 50.

S88: The storing/reading unit 59 of the information processing system 50 identifies the attribution of the content data indicated by the received upload ID, and registers the content ID, the content type, the content attribution, the recording time, and the path information in the content information storage unit 5007 in association with one another.

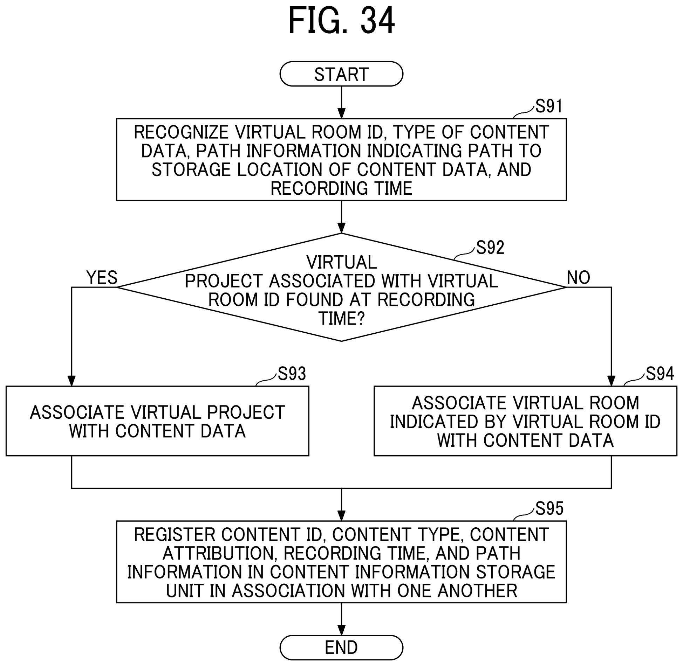

Next, a process for identifying and registering the attribution of content data in the information processing system 50 will be described. FIG. 34 is a flowchart illustrating a processing procedure performed in the information processing system 50 according to the present embodiment until the attribution of content data is identified and registered.

S91: The storing/reading unit 59 of the information processing system 50 recognizes, based on the acquired information, information on content data to be registered. Specifically, the storing/reading unit 59 recognizes a virtual room ID associated with a device (e.g., the image capturing apparatus 10) that has generated the content data, the type of the content data, path information indicating a path to the storage location of the content data, and a recording time.

S92: The determination unit 62 of the information processing system 50 refers to the virtual project period information storage unit 5006 and determines whether a virtual project associated with the virtual room ID is found at the recording time.

For example, the determination unit 62 determines that such a virtual project is found when, if a deregistration time is set, the virtual project period information storage unit 5006 includes a record that is associated with the virtual room ID and in which the period between the registration time and the deregistration time includes the recording time.

The determination unit 62 also determines that such a virtual project is found when, if a deregistration time is not set, the virtual project period information storage unit 5006 includes a record that is associated with the virtual room ID and in which the registration time is earlier than the recording time.

S93: Based on a determination that the virtual project is found (S92: YES), the association processing unit 53 of the information processing system 50 associates the virtual project with the content data.

S94: Based on a determination that the virtual project is not found (S92: NO), the association processing unit 53 of the information processing system 50 associates the virtual room indicated by the recognized virtual room ID with the content data.

S95: The storing/reading unit 59 of the information processing system 50 registers the content ID, the content type, the content attribution, the recording time, and the path information in the content information storage unit 5007 in association with one another. In one example, the content attribution indicates a virtual project or a virtual room associated with the content data by the association processing unit 53.

Through the control described above, the information processing system 50 according to the present embodiment can manage content (recorded content data) in association with a virtual project. Thus, the content associated with the virtual project is viewable to a user belonging to the virtual project.

### Second Embodiment

The embodiment described above illustrates an example in which a virtual project is registered in a virtual room selected from among virtual rooms not registered in other virtual projects. However, the embodiment described above is not limited to an example in which a virtual room is selected from among virtual rooms not registered in other virtual projects. In a second embodiment of the present disclosure, by way of example, a virtual room is selectable from among virtual rooms registered in other virtual projects, that is, a plurality of virtual projects may be registered in a virtual room.

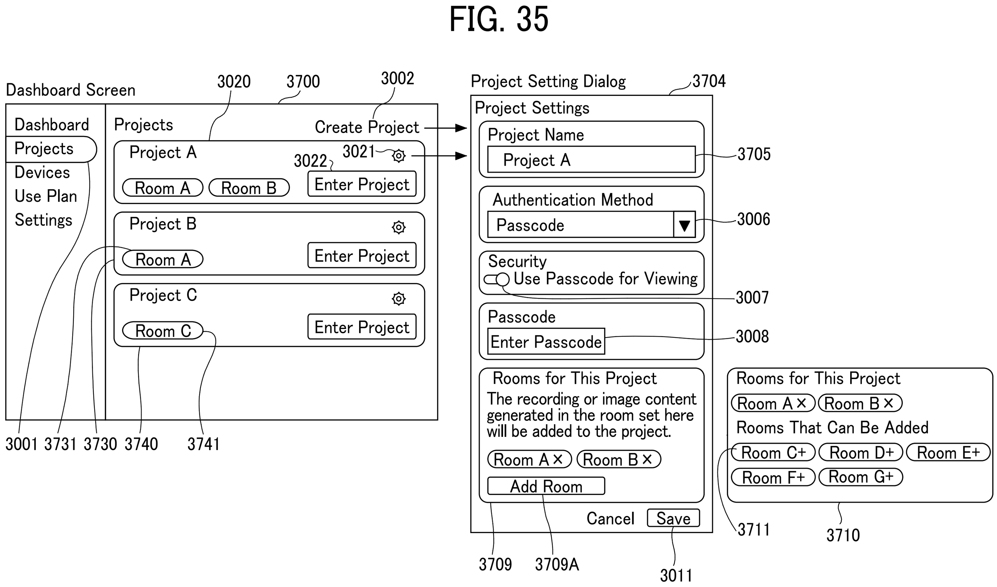

FIG. 35 is a diagram illustrating an example of a dashboard screen 3700 displayed on the communication terminal 30 of an administrator of a virtual room by the information processing system 50 according to the present embodiment. Components of the dashboard screen 3700 that are similar to those of the dashboard screen 3000 according to the first embodiment are assigned the same reference numerals and will not be described.

On the dashboard screen 3700 illustrated in FIG. 35, the project field 3020 indicates that virtual room A and virtual room B are associated with project A. Further, a project field 3730 indicates that the virtual room A is associated with project B. Further, a project field 3740 indicates that virtual room C is associated with project C.

That is, the dashboard screen 3700 according to the present embodiment can accept an operation for associating a virtual room with a plurality of virtual projects. Thus, the information processing system 50 can manage the projects A and B in association with the same virtual room A.

In one example, a project setting dialog 3704 is a dialog for editing the project A.

A room setting field 3709 is a field for setting a virtual room to be associated with the project. In the room setting field 3709, the virtual rooms A and B are set.

For example, the project setting unit 61 of the information processing system 50 accepts pressing of an "Add Room" button 3709A by the administrator through the communication terminal 30, and thereafter accepts a selection of one or more virtual rooms from a list 3710 of virtual rooms under contract.

In an example indicated by the list 3710 on the project setting dialog 3704, an icon 3711 of the virtual room C, which is currently associated with the virtual project C, is displayed in a selectable manner. That is, the administrator can associate the virtual room C with the virtual project A.

As described above, the project setting unit 61 of the information processing system 50 associates a virtual room with a plurality of projects in the project setting dialog 3704 in accordance with an operation by the administrator. In response to the association, the storing/reading unit 59 updates the virtual project period information storage unit 5006.

Next, the virtual project authentication information storage unit 5005 and the virtual project period information storage unit 5006 according to the present embodiment will be described.

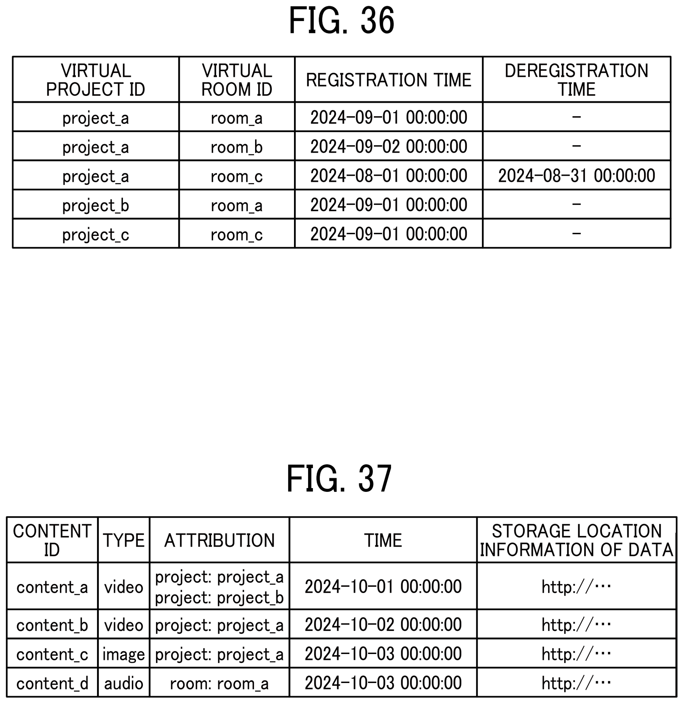

FIG. 36 is an illustration of virtual project period information stored in the virtual project period information storage unit 5006 according to the present embodiment.

The virtual project period information storage unit 5006 stores a period during which a project indicated by a virtual project ID and a virtual room indicated by a virtual room ID are associated with each other.

In the example illustrated in FIG. 36, the virtual project A (project_a) and a virtual project B (project_b) are associated with the virtual room A (room_a) on or after September 1, 2024 (2024-09-01).

In a state where a plurality of virtual projects are associated with the virtual room A (room_a), the association processing unit 53 of the information processing system 50 associates content generated by a device associated with the virtual room A with the plurality of virtual projects. The storing/reading unit 59 stores the content in the content information storage unit 5007 such that the attribution of the content includes the plurality of virtual projects.

FIG. 37 is an illustration of content information stored in the content information storage unit 5007 according to the present embodiment. The content information storage unit 5007 stores attribution indicating an entity with which content is associated.

The example illustrated in FIG. 37 indicates that content distributed in the virtual room A at 00:00:00 on October 1, 2024 (2024-10-01 00:00:00) is associated with the virtual project A (project_a) and a virtual project B (project_b).

That is, the association processing unit 53 according to the present embodiment refers to the virtual project period information storage unit 5006 and, when a virtual room associated with a device that has generated content is associated with a plurality of virtual projects, associates the plurality of virtual projects with the content ID of the content. In response to the association, the storing/reading unit 59 registers information that identifies the plurality of associated virtual projects in the item "attribution" in the content information storage unit 5007.

The information processing system 50 according to the present embodiment enables content to be shared across a plurality of virtual projects, thereby improving convenience.

### Third Embodiment

In the embodiments described above, content associated with a virtual project is unavailable to other virtual projects. Depending on situations such as content takeover, content associated with a virtual project may be used for another virtual project. Accordingly, a third embodiment of the present disclosure illustrates a case where content associated with a virtual project is set to be available to another virtual project in the information processing system 50.

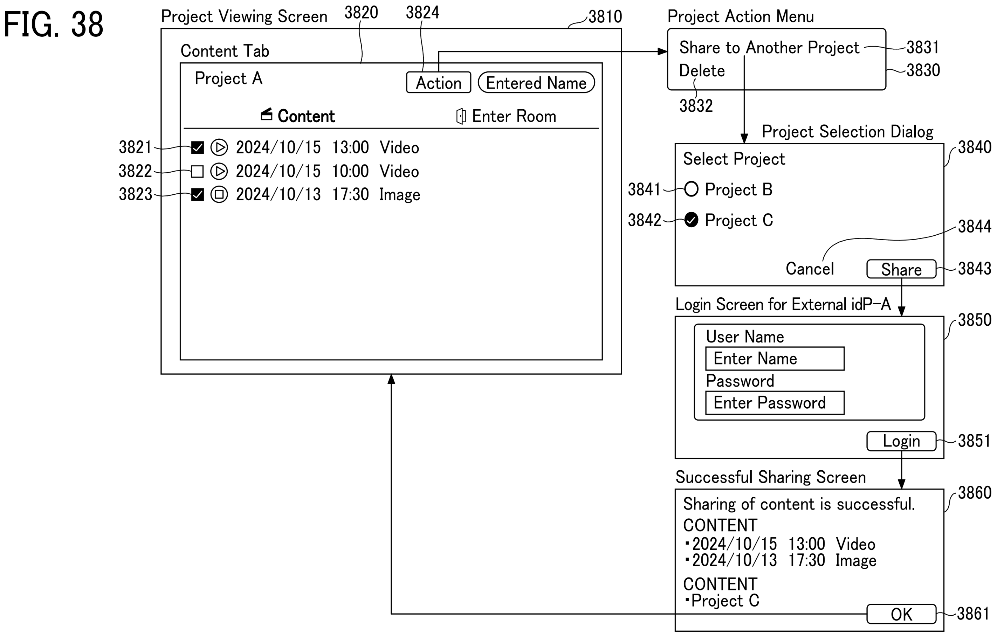

FIG. 38 is a diagram illustrating a screen flow for sharing content data associated with one virtual project with another virtual project according to the present embodiment.

A project viewing screen 3810 illustrated in FIG. 38 displays a content tab 3820. The content tab 3820 displays a list of content items. Checkboxes 3821 to 3823 are displayed for the respective content items in the list. That is, the checkboxes 3821 to 3823 allow selection of one or more of the content items. In the example illustrated in FIG. 38, the content items corresponding to the checkboxes 3821 and 3823 are selected.

An "Action" button 3824 is a button for executing an action on the selected content.

In response to receipt of a notification from the communication terminal 30 that pressing of the "Action" button 3824 has been accepted, the screen generation unit 52 of the information processing system 50 generates a project action menu 3830. The communication terminal 30 displays the project action menu 3830, which is received from the information processing system 50.

The project action menu 3830 includes a "Share to Another Project" button 3831 and a "Delete" button 3832. When pressing of the "Delete" button 3832 is accepted, the information processing system 50 deletes the content selected on the project viewing screen 3810.

In response to receipt of a notification from the communication terminal 30 that pressing of the "Share to Another Project" button 3831 has been accepted, the screen generation unit 52 of the information processing system 50 generates a project selection dialog 3840. The communication terminal 30 displays the project selection dialog 3840, which is received from the information processing system 50.

The project selection dialog 3840 displays radio buttons 3841 and 3842, a "Share" button 3843, and a "Cancel" button 3844. The radio button 3841 is used to select the project B as the sharing destination of the content, and the radio button 3842 is used to select the project C as the sharing destination of the content.

In response to receipt of a notification from the communication terminal 30 that pressing of the "Share" button 3843 has been accepted in a state where one of the radio buttons 3841 and 3842 is selected, the authentication unit 55 of the information processing system 50 performs control to display an authentication screen corresponding to the virtual project selected as the sharing destination. In the example illustrated in FIG. 38, the virtual project C corresponding to the radio button 3842 is selected as the sharing destination. Thus, the communication terminal 30 displays an authentication screen for logging in to the virtual project C.

In the example illustrated in FIG. 38, a login screen 3850 for the external idP is displayed on the communication terminal 30. In the example illustrated in FIG. 38, the login screen 3850 for the external idP is displayed in order to log in to the virtual project C. Any screen corresponding to an authentication method associated with the virtual project C, such as a passcode input screen, may be displayed. The user inputs information for logging in to the virtual project C and presses a login button 3851 on the login screen 3850. Accordingly, the external idP authenticates the user, based on the information received from the communication terminal 30.

In the information processing system 50, in response to the communication control unit 57 receiving a notification of successful authentication from the external idP, the storing/reading unit 59 updates the content information storage unit 5007 to share the content in the virtual project C. Details of the update will be described below.

Subsequently, the screen generation unit 52 generates a successful sharing screen 3860. The communication terminal 30 displays the successful sharing screen 3860, which is received from the information processing system 50.

The successful sharing screen 3860 displays the shared content and the virtual project in which the content is to be shared.

In response to receiving a notification from the communication terminal 30 that pressing of an OK button 3861 on the successful sharing screen 3860 has been accepted, the screen generation unit 52 of the information processing system 50 generates the project viewing screen 3810 again. The communication terminal 30 displays the project viewing screen 3810, which is received from the information processing system 50.

In the present embodiment, a user belongs to a plurality of virtual projects in order to share content across the plurality of virtual projects. That is, the user logs in to a virtual project with which the content is to be shared after logging in to a source virtual project from which the content is to be shared.

Next, a process for authenticating a virtual project with which content is to be shared in the information processing system 50 according to the present embodiment will be described.

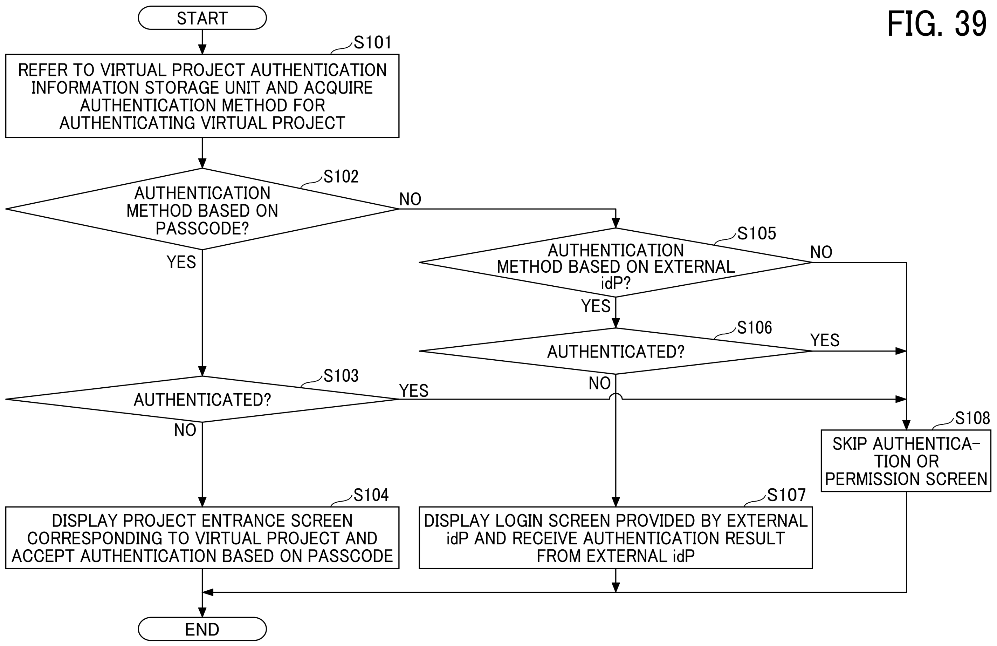

FIG. 39 is a flowchart illustrating a process for authenticating a virtual project with which content is to be shared in the information processing system 50 according to the present embodiment. In the flowchart illustrated in FIG. 39, a user has already logged in to the source virtual project from which the content is to be shared. Further, selection of a virtual project with which the content is to be shared has been accepted on the project selection dialog 3840 illustrated in FIG. 38.

S101: The storing/reading unit 59 refers to the virtual project authentication information storage unit 5005 and acquires an authentication method for authenticating the virtual project for which the selection has been accepted.

S102: The authentication unit 55 determines whether the acquired authentication method is a passcode.

S103: Based on a determination that the acquired authentication method is a passcode (S102: YES), the authentication unit 55 determines whether the virtual project has been authenticated. For example, in the case of a web application, the authentication unit 55 can refer to session information in a cookie to determine whether the virtual project has been authenticated.

S104: Based on a determination by the authentication unit 55 that the virtual project has not been authenticated (S103: NO), the information processing system 50 causes the communication terminal 30 to display a project entrance screen corresponding to the virtual project, which is generated by the screen generation unit 52, and performs authentication using the project entrance screen.

S105: Based on a determination that the acquired authentication method is not a passcode (S102: NO), the authentication unit 55 determines whether the authentication method is authentication using an external idP.

S106: Based on a determination that the acquired authentication method is authentication using an external idP (S105: YES), the authentication unit 55 determines whether the virtual project has been authenticated. For example, in the case of a web application, the authentication unit 55 can refer to session information in a cookie to determine whether the virtual project has been authenticated.

S107: Based on a determination by the authentication unit 55 that the virtual project has not been authenticated (S106: NO), the information processing system 50 causes the communication terminal 30 used by the user to display a login screen provided by the external idP and receives an authentication result from the external idP.

S108: Based on a determination in step S103 by the authentication unit 55 that the virtual project has been authenticated (S103: YES), based on a determination in step S106 by the authentication unit 55 that the virtual project has been authenticated (S106: YES), or based on a determination in step S105 by the authentication unit 55 that the authentication method is not authentication using an external idP (the authentication method is set to none) (S105: NO), the authentication unit 55 determines that the authentication has been completed and skips the authentication or permission screen.

In response to completion of authentication through the process illustrated in FIG. 39, the information processing system 50 displays the successful sharing screen 3860 illustrated in FIG. 38. Accordingly, the content is shared across a plurality of virtual projects.

The authentication process illustrated in FIG. 39 is also applicable to login to the virtual project according to the first embodiment, in addition to login to a virtual project with which content is to be shared. In the application to login to the virtual project according to the first embodiment, the project entrance screen 3100 illustrated in FIG. 31A is displayed as appropriate.

The present embodiment illustrates an example in which the user performs an operation for sharing content across a plurality of virtual projects. In the present embodiment, instead of the user, the administrator may perform an operation for sharing content across a plurality of virtual projects. In a case where the administrator performs an operation for sharing content across a plurality of virtual projects, the authentication process described above may be omitted.

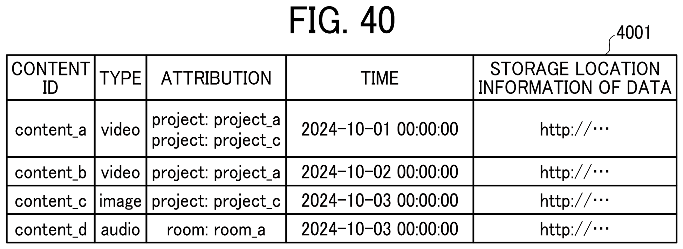

FIG. 40 is an illustration of content information stored in the content information storage unit 5007 according to the present embodiment.

In the example illustrated in FIG. 40, in a record 4001, the virtual project A (project_a) and the virtual project C (project_c) are associated with each other.

When a request for sharing content with a virtual project is received via the screen illustrated in FIG. 38, the association processing unit 53 according to the present embodiment associates the virtual project with the content. In accordance with the association, the storing/reading unit 59 adds the virtual project ID of the virtual project with which the content is to be shared to the item "attribution" of the corresponding record in the virtual project period information storage unit 5006.

In the example illustrated in FIG. 38, the storing/reading unit 59 adds the virtual project C (project_c) to the item "attribution" of the record 4001. Thus, the content indicated by the record 4001 can be viewed across the virtual project A and the virtual project C.

The information processing system 50 according to the present embodiment enables content to be shared across a plurality of virtual projects, thereby improving convenience.

The communication system 1 according to the embodiments described above may be used in various fields. A specific application field will now be described.

### Application Example of Communication System in Telemedicine

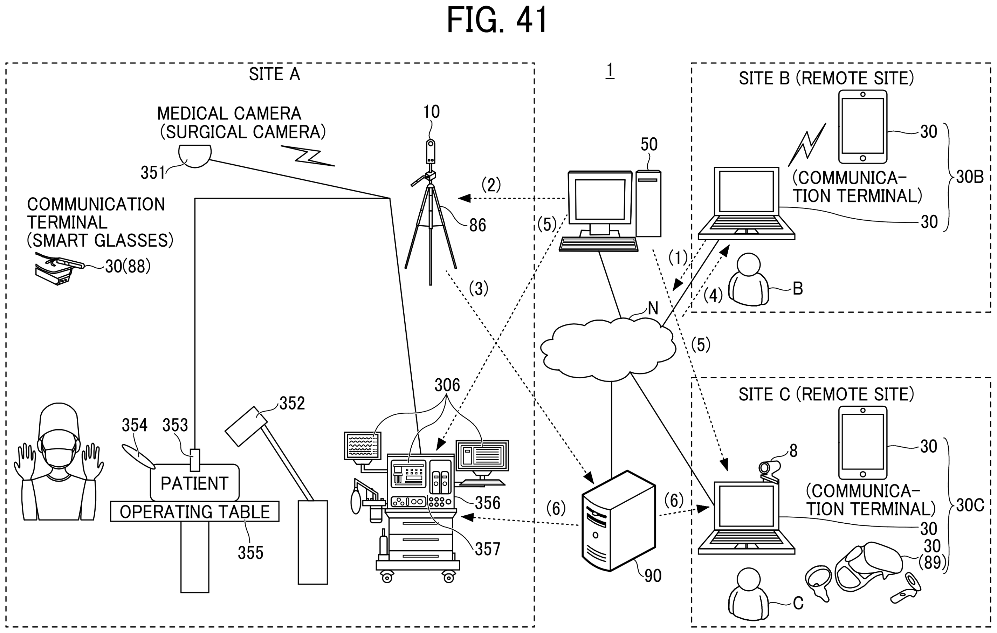

FIG. 41 is a diagram illustrating an example of remote communication using the communication system 1 in telemedicine. In the description of FIG. 41, differences from FIG. 1 will be described. In FIG. 41, the site A is an operating room. The processing steps (1) to (6) in FIG. 41 may be similar to those in FIG. 1. In FIG. 41, a patient is placed on an operating table 355 and is subjected to surgery by a medical professional such as a surgeon. The medical professional (corresponding to the user) operates on the patient with various surgical tools 354 such as forceps and a scalpel. The medical professional may wear the smart glasses 88 and transmit an image of the surgical field for surgery performed by the medical professional to the communication network N. Various cameras are placed in the operating room. Examples of the cameras include a surgical camera 351, a surgical field camera 352, and an endoscope 353. All of the cameras in the operating room and the smart glasses 88 are associated with a virtual room.

A main unit 356 is installed in the operating room. The main unit 356 monitors the vitals of a patient, the operating state of medical devices, and the like. The main unit 356 corresponds to the communication terminal 30 according to the embodiments described above. The communication terminal 30 (i.e., the main unit 356) in the operating room may have a function of receiving video from the endoscope 353 or the surgical field camera 352 in addition to the functions illustrated in FIG. 1. In one example, the communication terminal 30 displays the received video on displays 306 and transmits the video to the information processing system 50 as the video of the site at which the communication terminal 30 is located. An operation panel 357 is an input interface that accepts various operations. In one example, a medical professional operates a device in the operating room via the operation panel 357. The endoscope 353, the surgical camera 351, and the surgical field camera 352 may communicate with the information processing system 50 directly without the intervention of the communication terminal 30.

The communication terminal 30 may have the function of an electronic medical record system or the function of communicating with an electronic medical record system. The communication terminal 30 may display information on an electronic medical record on the display 306.

In some cases, a patient may be subjected to a plurality of procedures. Accordingly, for example, in the communication system 1, each patient may be assigned a virtual room, and each procedure may be assigned a virtual project. As described in the second or third embodiment, the communication system 1 can perform processing to allow content to be viewed in a plurality of virtual projects.

In the example configurations such as that illustrated in FIG. 13, the information processing system 50, the image capturing apparatus 10, and the communication terminal 30 are divided according to main functions thereof to facilitate understanding of the processes performed by the information processing system 50, the image capturing apparatus 10, and the communication terminal 30. No limitation on the present disclosure is intended by how the functions are divided by process or by the name of the functions. The processing of each of the information processing system 50, the image capturing apparatus 10, and the communication terminal 30 may be divided into more units of processing in accordance with the content of the processing. Further, the division may be made such that each unit of processing includes more processing operations.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The apparatuses or devices described in one or more embodiments of the present disclosure are merely examples of computing environments that can implement the embodiments disclosed herein. In some embodiments, the information processing system 50 includes multiple computing devices such as a server cluster. The multiple computing devices communicate with one another through any type of communication link including a network, shared memory, or the like and perform the processes disclosed herein.

Further, the information processing system 50 may be configured to share the processing steps disclosed herein, for example, the processing steps illustrated in FIGs. 27, 28, 32, 33, 34, 39, and so on in various combinations. For example, a process executed by a predetermined unit may be executed by multiple information processing apparatuses included in the information processing system 50. The components of the information processing system 50 may be integrated into one server apparatus or divided into multiple apparatuses.

As described above, the communication system 1 according to an embodiment of the present disclosure stores generated content in association with a virtual project when the content is generated by a device, and performs control such that the content associated with the virtual project is viewable to the communication terminal 30 belonging to the virtual project, thereby managing users to whom the content is available.

## Claims

1. An information processing system (50) for sharing content in a virtual room for which one or more virtual projects are settable, the information processing system (50) comprising:
a determination unit (62) configured to, in a case where the content is to be shared, determine whether the one or more virtual projects include a virtual project associated with the virtual room;
an association processing unit (53) configured to, based on a determination that the one or more virtual projects include the virtual project, associate the content with the virtual project; and
a control unit (56) configured to share the content associated with the virtual project with a user associated with the virtual project.

2. The information processing system (50) according to claim 1, wherein
the one or more virtual projects include a plurality of virtual projects associated with the virtual room, and
the information processing system (50) further comprises a setting unit (61) configured to change, for each of the plurality of virtual projects, an authentication method for authenticating a user associated with a respective one of the plurality of virtual projects to participate in the respective one of the plurality of virtual projects.

3. The information processing system (50) according to claim 1 or 2, wherein
the association processing unit (53) is configured to, in a case where a plurality of virtual projects have been set for the virtual room when the content is generated, associate the generated content with the plurality of virtual projects set for the virtual room when the content is generated.

4. The information processing system (50) according to claim 1, 2 or 3, wherein
the one or more virtual projects include a plurality of virtual projects associated with the virtual room, the plurality of virtual projects including a first virtual project and a second virtual project, the first virtual project being associated with the content, and
the association processing unit (53) is configured to associate the content associated with the first virtual project with the second virtual project.

5. The information processing system (50) according to any one of claims 1 to 4, wherein
the association processing unit (53) is configured to associate the content with the virtual project in a case where a period is set for the virtual project and includes a time at which the content is generated.

6. A communication system (1) comprising:
a plurality of communication terminals (30); and
an information processing system (50) to share content in a virtual room for which one or more virtual projects are settable, wherein
the information processing system (50) includes:
a communication unit (51) communicable with the plurality of communication terminals (30);
a determination unit (62) configured to, in a case where the content is to be shared, determine whether the one or more virtual projects include a virtual project associated with the virtual room;
an association processing unit (53) configured to, based on a determination that the one or more virtual projects include the virtual project, associate the content with the virtual project; and
a control unit (56) configured to share the content associated with the virtual project with a communication terminal (30) associated with the virtual project among the plurality of communication terminals (30), and
the communication terminal (30) includes:
a communication unit (31) configured to communicate with the information processing system (50) to access the virtual project associated with the communication terminal (30); and
a display control unit (33) configured to cause a display unit to display the content associated with the virtual project in response to accessing the virtual project.

7. An information processing method for sharing content in a virtual room for which one or more virtual projects are settable, the information processing method comprising:
determining (S92), in a case where the content is to be shared, whether the one or more virtual projects include a virtual project associated with the virtual room;
associating (S93), based on a determination that the one or more virtual projects include the virtual project, the content with the virtual project; and
sharing (S95; 3860) the content associated with the virtual project with a user associated with the virtual project.

8. Carrier means carrying computer readable code for controlling a computer system to carry out the method of claim 7.
